(19) Europäisches Patentamt
European Patent Office
Office européen des brevets

(11) **EP 2 547 537 B1**

## (12) EUROPÄISCHE PATENTSCHRIFT

(45) Veröffentlichungstag und Bekanntmachung des Hinweises auf die Patenterteilung:
**20.04.2016  Patentblatt 2016/16**

(21) Anmeldenummer: **11701489.4**

(22) Anmeldetag: **19.01.2011**

(51) Int Cl.:
***B60C 15/06*** *(2006.01)*

(86) Internationale Anmeldenummer:
**PCT/EP2011/050650**

(87) Internationale Veröffentlichungsnummer:
**WO 2011/113626 (22.09.2011 Gazette 2011/38)**

(54) **FAHRZEUGLUFTREIFEN**

PNEUMATIC VEHICLE TYRE

PNEUMATIQUES POUR VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.03.2010  DE 102010016007**

(43) Veröffentlichungstag der Anmeldung:
**23.01.2013  Patentblatt 2013/04**

(73) Patentinhaber: **Continental Reifen Deutschland GmbH**
**30165 Hannover (DE)**

(72) Erfinder: **KRAUS, Martin Josef**
**30167 Hannover (DE)**

(74) Vertreter: **Widjaja, Wira**
**Continental Aktiengesellschaft**
**Patente und Lizenzen**
**Postfach 169**
**30001 Hannover (DE)**

(56) Entgegenhaltungen:
**US-A1- 2005 155 688      US-A1- 2007 113 944**
**US-A1- 2008 035 261      US-A1- 2009 056 851**

**Beschreibung**

Die Erfindung betrifft einen Fahrzeugluftreifen, insbesondere für Schwerlastfahrzeuge, in radialer Bauart, mit zumindest einer Karkasseinlage mit Festigkeitsträgern aus Stahlkord oder textilen Korden, welche in Wulstbereichen um Wulstkerne Hochschläge und eine offene Wulstkonstruktion bildend umgeschlagen ist, wobei in jedem Wulstbereich entlang der Außenseite der Karkasseinlage bzw. der äußersten Karkasseinlage, den Wulstkern U-förmig umlaufend, ein Wulstverstärker angeordnet ist, dessen reifenaußenseitiges Ende sich radial innerhalb des Endes des Karkasshochschlages befindet und bis auf eine Höhe reicht, welche 18 mm bis 77 mm beträgt und dessen reifeninnenseitiges Ende bis auf eine Höhe reicht, welche 19 mm bis 91 mm beträgt, wobei die Höhen in radialer Richtung vom Felgeneckpunkt des Wulstes gemessen sind, wobei zumindest der Endabschnitt des Karkasshochschlages und der diesem benachbarte Endabschnitt des Wulstverstärkers von Gummimischungen gesondert eingefasst sind, wobei in jedem Wulst die Endabschnitte des Karkasshochschlages und des Wulstverstärkers von Profilgliedern eines mehrgliedrigen, einteiligen Gabelprofils eingefasst und in einem definierten Abstand gehalten sind.

Der Karkasshochschlag reicht bei Steilschulterreifen der Felgengröße 17.5 bis auf eine Höhe, welche ca. 28 mm bis ca. 35 mm beträgt, bei Steilschulterreifen der Felgengröße 19.5 beträgt die Höhe des Karkasshochschlages zwischen ca. 32 mm bis zu ca. 38 mm und bei Steilschulterreifen der Felgengrößen 22.5 und 24.5 beträgt die Höhe des Karkasshochschlages zwischen ca. 32 mm bis zu ca. 38 mm.

Bei Schrägschulterreifen ist das reifenaußenseitige Ende des Wulstverstärkers so angeordnet, dass dieses sich ebenfalls radial innerhalb des Endes des Karkasshochschlages befindet, hier jedoch, abhängig von der Felgengröße, Felgenbreite und Felgenausführung, auf eine Höhe reicht, die ca. 20 mm bis ca. 77 mm beträgt und dessen reifeninnenseitiges Ende entweder unter oder neben dem Wulstkern endet oder reifeninnenseitig bis auf eine maximale Höhe reicht, welche höchstens 91 mm beträgt, wobei diese Höhen in radialer Richtung vom Felgeneckpunkt des Wulstes gemessen werden. Der Karkasshochschlag reicht, eine offene Wulstkonstruktion bildend, bis auf eine Höhe, welche bei Schrägschulterreifen der Felgengrößen 15 und 16 ca. 30 mm bis ca. 39 mm, bei Schrägschulterreifen der Felgengrößen 20, 22 und 24 ca. 40 mm bis ca. 91 mm beträgt.

Der Wulstverstärker kann ein einlagiger Stahlkordwulstverstärker sein oder auch mit mehreren Lagen aus in eine vulkanisierbare Elastomermischung eingebetteten Festigkeitsträgern aus Stahlkord ausgeführt werden. Die Stahlkorde können als monofilamentige Drähte ausgeführt sein, insbesondere sind sie mehrfilamentig und verseilt. Die Orientierung der Stahlkorde in den einzelnen Lagen kann hierbei gleich oder unterschiedlich sein, so dass sich bei unterschiedlicher Orientierung mindestens zwei zueinander kreuzende Lagen ergeben. Die Winkel der Festigkeitsträger in den unterschiedlichen Lagen können ebenfalls unterschiedlich groß sein, so daß diese Festigkeitsträger mindestens zwei verschiedene Winkel aufweisen.

Alternativ zum Stahlkordwulstverstärker können als Wulstverstärker auch Festigkeitsträger aus textilen Korden ausreichender Zug- und Stauchfestigkeit verwendet werden, die in einer oder mehreren Lagen angeordnet sind. Bevorzugt werden verseilte, textile Korde als Festigkeitsträger in der Wulstverstärkung eingesetzt. Diese Festigkeitsträger aus verseilten, textilen Korden können beispielsweise aus Polyamiden, Polyestern, Polypeptiden, Polyolefinen oder Polyglykosiden hergestellt sein und werden so orientiert, dass der Winkel zur Umfangsrichtung mindestens 16° und höchstens 42° beträgt. Der Durchmesser der Festigkeitsträger beträgt bei der hier beschriebenen Verwendung von verseilten, textilen Korden mindestens ca. 0,14 mm bis höchstens ca. 2,13 mm. Werden mehrere Lagen aus in eine vulkanisierbare Elastomermischung eingebetteten verseilten, textilen Korden eingesetzt, so beträgt der Durchmesser der Festigkeitsträger mindestens ca. 0,14 mm und höchstens 1,22 mm. Bei Verwendung von mehreren Lagen aus textilen Korden werden die textilen Korde dieser Lagen so angeordnet, dass sie entlang ihrer Erstreckung in der jeweiligen Lage weitgehend parallel zueinander sind. Die textilen Korde der unterschiedlichen Lagen können mit unterschiedlicher Orientierung zur Umfangsrichtung und mit unterschiedlichen Winkeln zur Umfangsrichtung angeordnet sein. Durch die Verwendung von kreuzenden Korden in unterschiedlichen Lagen oder durch die Verwendung von nicht kreuzenden Korden in unterschiedlichen Lagen können, unter Berücksichtigung des verwendeten Kordmaterials und der Kordkonstruktion, unterschiedliche mechanische Eigenschaften der Wulstverstärkung erzielt werden.

Bei Verwendung von mehreren Lagen aus textilen Korden befinden sich deren reifenaußenseitigen Enden bei Steilschulterreifen radial innerhalb des äußersten Karkasshochschlages, wobei deren radial höchstes Ende bis auf eine Höhe reicht, welche 18 mm bis 30 mm beträgt und deren reifeninnenseitig höchstes Ende bis auf eine Höhe reicht, welche 19 mm bis 61 mm beträgt, wobei die Höhen in radialer Richtung vom Felgeneckpunkt des Wulstes gemessen sind.

Es sind unterschiedliche Wulstverstärkerkonstruktionen für LKW-Reifen, und zwar sowohl für Steilschulter- als auch für Schrägschulterreifen, bekannt. Bei einer dieser Wulstverstärkerkonstruktionen sind zwei bis vier im Kreuzverband angeordnete Gewebelagen vorgesehen, welche radial außerhalb des Hochschlages der Karkasseinlage verlaufen, aneinander anliegen und zueinander gestaffelt angeordnet sind. Bei einer anderen bekannten Ausführung ist als Wulstverstärker eine einzige Lage aus gummierten Stahlkorden vorgesehen, welche radial außerhalb des Karkasshochschlages den Wulstkern umläuft. Bei LKW-Reifen, die besonders belastbar sein sollen, ist es üblich, in den Wulstbereichen Kombinationen von Verstärkungslagen mit textilen Festigkeitsträgern und Verstärkungslagen mit Stahlkorden als Festigkeitsträger einzusetzen. Zur Verstärkung der im Betrieb des Reifen stark belasteten Schnittkanten des Karkasslagenhochschlages und des Stahlkordwulstverstärkers ist es bekannt, den Karkasslagenhochschlag mit einer Kanteneinfassung zu versehen oder den Karkasslagenhochschlag und das reifeninnenseitige Ende des Stahlkordwulstverstäerkers mit einer Kanteneinfassung zu versehen oder den Karkasslagenhochschlag sowie sowohl das reifeninnenseitige als auch das reifenaußenseitige Ende mit einer Kanteneinfassung zu versehen. Diese Kanteneinfassungen werden auch als Wraps bezeichnet. Diese Wraps bestehen üblicherweise aus Gummimischungen mit Ruß als Hauptfüllstoff und enthalten, um ihr Einbinden in den Wulst des Reifens zu gewährleisten, zumindest ein Haftvermittlersystem. Die Kanteneinfassungen verursachen hohe Produktionskosten und Produktivitätsverluste in der Materialvorbereitung. Außerdem ist die Einbettung der Schnittkanten der Karkasseinlage, sofern diese mit einer Kanteneinfassung versehen ist, und des Wulstverstärkers, sofern dieser mit einer Kanteneinfassung versehen ist oder an beiden Kanten eingefasst ist, oft mangelhaft bzw. ungenügend. Ursache hierfür ist zwischen der Schnittkante und der Innenfläche des Wraps eingeschlossene Luft, die sich zwar in nachfolgenden Arbeitsschritten wieder entfernen lässt, dies aber mit der Folge, dass die Außenkante des eingefassten Bauteiles Unregelmäßigkeiten unterschiedlicher Größe und Ausdehnung aufweist. In nachfolgenden Maschinen bzw. Arbeitsprozessen wird damit die Führung über die Kanten der mit einer Kanteneinfassung versehenen Bauteile verschlechtert oder die Wraps müssen wieder entfernt werden. Weiterhin wird die Dicke der Schnittkanten der gummierten Festigkeitsträger durch die Wraps deutlich vergrößert, in der Regel wird diese etwa verdoppelt. Dies führt meist zu größeren Volumina der durch die eingefassten Kante eingeschlossenen Luft und entsprechender Luftfeuchtigkeit, wobei das Volumen der durch die eingefassten Kante eingeschlossenen Luft um bis zu einem Faktor sechs größer sein kann als wenn diese Schnittkante nicht eingefasst wäre. Die eingeschlossene Luft muss bei der anschließenden Vulkanisation des Reifenrohlings in den umgebenden Gummibauteilen gelöst werden und dies fällt umso schwerer, je größer das Volumen an eingeschlossener Luft ist. Gleichzeitig wirkt sich das über die Luftfeuchtigkeit mit eingeschlossene Wasser ungünstig auf die Vulkanisationsreaktion in den umgebenden Gummibauteilen aus, da die Wassermoleküle bei den Vulkanisationstemperaturen ganz oder teilweise in den gasförmigen Aggregatzustand übergehen und damit hochreaktiv sind. Dies führt zu vielfältigen Störungen der Vulkanisationsreaktion, die in Verbindung mit dem Lösungsprozess der eingeschlossenen Luft in den betroffenen Gummibauteilen unmittelbar die Leistungsfähigkeit dieser Bauteile herabsetzen und zu einem frühzeitigen Ausfall des vulkanisierten Reifens führen. Mit Wraps eingefasste Schnittkanten an Festigkeitsträgern führen außerdem dazu, dass die Lagerung oder Zwischenlagerung dieser eingefassten Festigkeitsträger in Speicherkassetten mit erheblichen Kapazitätsverlusten verbunden ist und außerdem ein Verziehen in horizontaler Richtung der eingefassten Karkasseinlage stattfinden kann. Wraps mit unterschiedlichen Schenkellängen, welche auch asymmetrische Wraps genannt werden, lassen sich nur unter Kapazitätsverlusten produzieren, einige der beschriebenen Fehlerbilder tauchen in noch größerer Häufigkeit auf. Dies führt zu einem erhöhten Kontrollaufwand in der Qualitätssicherung. Wraps als Kanteneinfassung für die Karkasseinlage und Wulstverstärkunglagen lassen sich also grundsätzlich nicht optimal in die Zwischenlagerungs- und Reifenaufbauprozesse einbinden.

Die US 2007/113944 A1 offenbart einen Fahrzeugluftreifen gemäß dem Oberbegriff des Anspruches 1. Die Endabschnitte des Karkasshochschlages und des Wulstverstärkers sind gemäß einer Ausführungsform in ein relativ großvolumiges Gummipolster eingebettet, sodass sie von Gliedern dieses Gummipolsters eingefasst sind. Aus der US 2009/056851 A1 und der US 2008/035261 A1 ist jeweils ein Fahrzeugluftreifen bekannt, bei dem die Endabschnitte des Karkasshochschlages und des Wulstverstärkers in bzw. zwischen einer Polstergummilage und einem gesonderten Polstergummi gehalten bzw. eingebettet ist, sodass die Endabschnitte des Karkasshochschlages und des Wulstverstärkers von diesen Bauteilen eingefasst sind.

Der Erfindung liegt die Aufgabe zugrunde, einen Ersatz für Wraps zur Verfügung zu stellen, welcher eine optimale Einbettung der Schnittkanten der Karkasseinlage und des Wulstverstärkers und gleichzeitig eine optimale Raumausfüllung über den Schnittkanten der Karkasseinlage und des Wulstverstärkers gewährleistet. Des Weiteren sollen definierte, mit hoher Genauigkeit reproduzierbare Abstände zumindest zwischen dem Endabschnitt des Karkasshochschlages und den diesem benachbarten Endabschnitt des Wulstverstärkers bei einer offenen Wulstkonstruktion gewährleistet sein, um die Wulsthaltbarkeit und somit die Reifenhaltbarkeit zu verbessern. Gleichzeitig sollen die erwünschten mechanischen Eigenschaften des Reifens in den Wulstbereichen sichergestellt werden können.

Gelöst wird die gestellte Aufgabe erfindungsgemäß dadurch, dass das Gabelprofil einen Schwerpunkt aufweist, der in dem Bereich des Karkasshochschlages und in einem Schwerpunktsbereich liegt, welcher eine Längserstreckungvon etwa 10 mm und eine Breite von etwa 3 mm aufweist.

Das gemäß der Erfindung im Wulst des Reifens eingebaute Gabelprofil stellt zwischen den Endabschnitten des Karkasshochschlages und des Wulstverstärkers und damit auch zwischen deren Festigkeitsträgern eine bestimmte, vorab festlegbare Distanz sicher. Dadurch werden Rissbildungen an den Schnittkanten des Karkasshochschlages und des Wulstverstärkers vermieden und die Reifenhaltbarkeit durch die Reduktion von strukturellen Ausfällen im Wulstbereich verbessert, wodurch auch die Lebenserwartung des Reifens und dessen Runderneuerungsfähigkeit erhöht werden. Durch das mehrgliedrige einteilige Gabelprofil ist das Risiko von Lufteinschlüssen an den Schnittkanten des Hochschlages der Karkasseinlage und des Wulstverstärkers nicht mehr gegeben, da das erfindungsgemäße, koordinativ wirksame Gabelprofil in der Reifenaufbaumaschine gebildet und auf die Schnittkanten und um die unmittelbar angrenzenden Bereiche der Schnittkanten des Hochschlages der Karkasseinlage und des Wulstverstärkers aufbeziehungsweise eingebracht und geschlossen wird. Dabei bleiben im Reifenaufbauprozess die Schnittkanten des Hochschlages der Karkasseinlage und des Wulstverstärkers bis zum letztmöglichen Zeitpunkt unbedeckt. Hierdurch können einerseits die auf den gummierten Festigkeitsträgern aufgebrachten Luftabführungsfäden, die aus Baumwolle oder Polyethylenterephtalat oder anderen Textilfasern gefertigt sein können, ihrer gedachten Funktion nachkommen und andererseits erfolgt eine bessere Raumausfüllung in den Bereichen über den Kanten beziehungsweise Schnittkanten der beschriebenen Bauteile Karkasseinlage und Wulstverstärker im Vergleich zur Verwendung von Kanteneinfassungen in Form von Wraps. Die Erfindung bewirkt ferner eine spürbare Kostenreduktion in der Produktion durch die Verringerung des Produktionsausschusses, der Nachbearbeitung der Reifen und etwaiger Reparaturkosten.

Gemäß einer bevorzugten Ausführungsform der Erfindung weist das Gabelprofil ein Profilglied auf, welches sich in Verlängerung des Karkasshochschlages erstreckt. Diese Maßnahme ist für eine gute Verankerung des Gabelprofils im Wulstbereich von Vorteil.

Wie erwähnt ist eine der Hauptaufgaben des Gabelprofils, zwischen den Endabschnitten des Karkasshochschlages und des Stahlkordwulstverstärkers eine Distanz sicherzustellen. Zweckmäßigerweise weist daher das Gabelprofil zwei den Endabschnitt des Hochschlages einfassende Profilglieder auf, wobei von dem weiter reifenaußenseitig verlaufenden Profilglied ein weiteres Profilglied abzweigt, welches entlang der Außenseite des Endabschnittes des Stahlkordwulstverstärkers verläuft.

Um die strukturelle Haltbarkeit der vom Gabelprofil eingefassten Bauteile deutlich zu verbessern, ist es von Vorteil, bestimmte Abmessungen für die einzelnen Profilglieder des Gabelprofils einzuhalten. Das radial innere Ende des den Endabschnitt des Karkasshochschlages reifeninnenseitig einfassenden Profilgliedes sollte sich in einer Höhe befinden, die zwischen 8 mm und 66 mm beträgt, das radial innere Ende des den Endabschnitt des Karkasshochschlages reifenaußenseitig erfassenden Profilgliedes sollte sich in einer Höhe befinden, die zwischen 5 mm und 58 mm beträgt, das radial innere Ende des den Endabschnitt des Wulstverstärkers reifenaußenseitig erfassenden Profilgliedes sollte auf einer Höhe enden, die zwischen 6 mm und 59 mm beträgt und das in Verlängerung des Karkasshochschlages verlaufende Profilglied sollte bis auf eine Höhe reichen, welche zwischen 36 mm und 104 mm beträgt. Sämtliche Höhenabmessungen sind auf den Felgeneckpunkt des Wulstes bezogen und in radialer Richtung ermittelt.

Das Gabelprofil sollte ferner eine maximale Erstreckungslänge von 76 mm und eine maximale Erstreckungsbreite von 8,6 mm aufweisen, um in die umliegenden Reifenbauteile optimal integriert werden zu können.

Bei einer bevorzugten Ausführungsform der Erfindung ist ein zweites, mehrgliedrig einteiliges Gabelprofil zum Einfassen des reifeninnenseitig gelegenen Endabschnittes des Stahlkordwulstverstärkers vorgesehen. Dieses Gabelprofil weist zwei den Endabschnitt des Stahlkordwulstverstärkers einfassende Profilglieder und ein weiteres Profilglied auf, welches in Verlängerung des Stahlkordwulstverstärkers verläuft. Auch an dieser Stelle des Wulstes verbessert ein Gabelprofil die Haltbarkeit des Wulstes.

Für ein optimales Einbinden des Gabelprofils in diesem Bereich des Wulstes ist es von Vorteil, wenn sein weiter reifenaußenseitig verlaufendes, den Endabschnitt des Wulstverstärkers erfassende Profilglied in einer Höhe endet, die zwischen 8 mm und 72 mm beträgt und wenn das zweite Profilglied in einer Höhe endet, die zwischen 6 mm und 70 mm beträgt. Das in Verlängerung des Wulstverstärkers verlaufende Profilglied sollte bis auf eine Höhe reichen, die zwischen 40 mm und 113 mm beträgt. Auch diese Höhen sind sämtlich auf den Felgeneckpunkt des Wulstes bezogen und in radialer Richtung gemessen.

Ein zusätzlicher Versteifungseffekt des Gabelprofils wird mit einer Ausführung der Gummimischung des Gabelprofils erzielt, welche als Füllstoff Kieselsäure enthält.

Weitere Merkmale Vorteile und Einzelheiten der Erfindung werden nun anhand der Figuren, die Ausführungsbeispiele darstellen, näher beschrieben. Dabei zeigen

Fig. 1 und Fig. 1b einen Querschnitt durch eine Ausführungsvariante eines mehrgliedrigen Gabelprofils,

Fig. 2 und Fig. 2b einen Querschnitt durch eine weitere Ausführungsvariante eines mehrgliedrigen Gabelprofils,

Fig. 3 einen Querschnitt durch einen der Wulstbereiche eines LKW-Reifens für Steilschulterfelgen,

Fig. 4 einen Querschnitt durch einen LKW-Reifen für Steilschulterfelgen mit Gabelprofilen gemäß Fig. 1 und Fig. 2,

Fig. 5 im Querschnitt den Reifen aus Fig. 4 auf einer Steilschulterfelge montiert,

Fig. 6 einen Querschnitt durch einen der Wulstbereiche eines LKW-Reifens für Schrägschulterfelgen,

Fig. 7 einen Querschnitt durch einen LKW-Reifen für Schrägschulterfelgen mit Gabelprofilen gemäß Fig. 1 und Fig. 2 und

Fig. 8 im Querschnitt den Reifen aus Fig. 7 auf einer Schrägschulterfelge montiert.

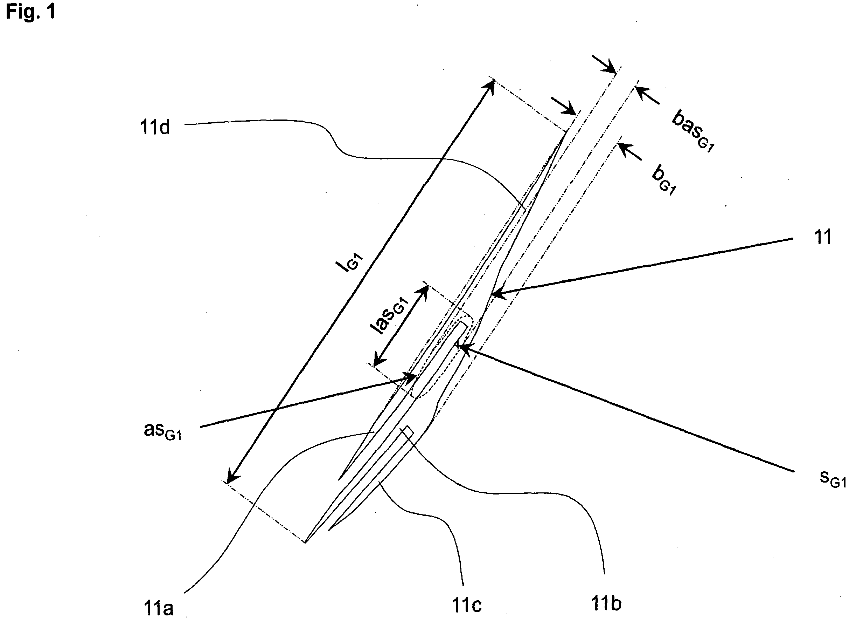

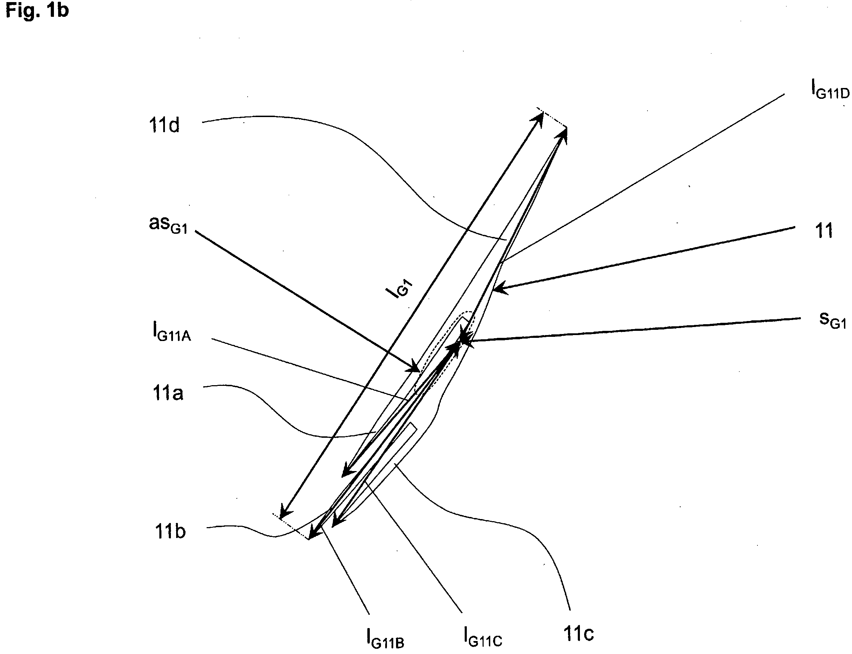

Fig.1 zeigt einen Querschnitt durch ein mehrgliedriges, koordinativ wirksames Gabelprofil 11, welches drei sich an der einen Seite erstreckende Profilglieder 11a, 11b und 11c und ein weiteres, viertes Profilglied 11d aufweist, welches den drei Profilgliedern 11a, 11b und 11c gegenüberliegt. Mit $l_{G1}$ ist die Gesamtlänge, mit $b_{G1}$ ist die Gesamtbreite und mit $s_{G1}$ ist der Schwerpunkt des Gabelprofiles 11 bezeichnet. Bei der Auslegung des Gabelprofiles 11 mit unterschiedlichen Längen $l_{G1}$ oder unterschiedlichen Breiten $b_{G1}$ ist darauf zu achten, dass sich der Schwerpunkt $s_{G1}$ des beschriebenen Gabelprofils 11 im Bereich $as_{G1}$ befindet. Dieser Bereich $as_{G1}$ nimmt eine Fläche ein, deren Begrenzung im Wesentlichen um den Karkasshochschlag 6a herumführt und sich über die Länge $las_{G1}$ erstreckt, welche etwa 10 mm beträgt und sich über die Breite $bas_{G1}$ erstreckt, welche etwa 3 mm beträgt.

Fig. 1b zeigt beispielhaft, wie die Erstreckungslängen $l_{G11A}$, $l_{G11B}$, $l_{G11C}$ und $l_{G11D}$ der Profilglieder 11a, 11b, 11c und 11d des Gabelprofils 11 unter Bezug auf den Schwerpunkt $s_{G1}$ bestimmt werden. Der Schwerpunkt $s_{G1}$ sollte sich bevorzugt im Bereich $as_{G1}$ befinden, wie in der Beschreibung von Fig. 1 erläutert.

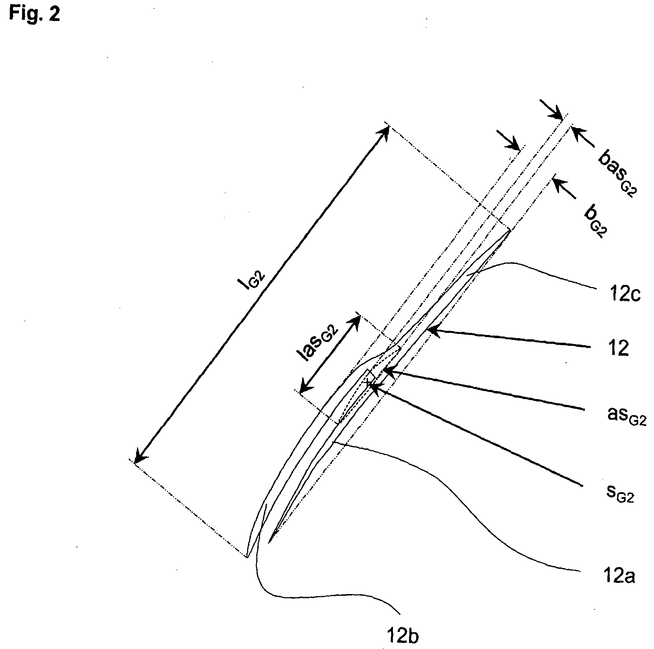

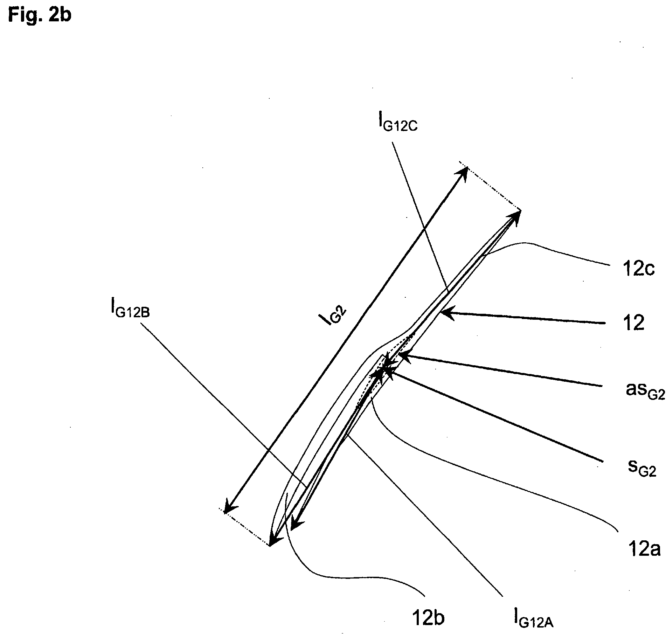

Fig. 2 zeigt einen Querschnitt durch ein weiteres mehrgliedriges, koordinativ wirksames Gabelprofil 12, welches zwei Profilglieder 12a und 12b auf der einen Seite und ein weiteres, drittes Profilglied 12c, welches den zwei Profilgliedern 12a und 12b gegenüberliegt, aufweist. Mit $l_{G2}$ ist die Gesamtlänge, mit $b_{G2}$ ist die Gesamtbreite und mit $s_{G2}$ ist der Schwerpunkt des Gabelprofiles 12 bezeichnet. Bei der Auslegung des Gabelprofiles 12 mit unterschiedlichen Längen $l_{G2}$ oder unterschiedlichen Breiten $b_{G2}$ ist darauf zu achten, dass sich der Schwerpunkt $s_{G2}$ des beschriebenen Gabelprofils 12 im Bereich $as_{G2}$ befindet. Dieser Bereich $as_{G2}$ nimmt eine Fläche ein, deren Begrenzung im Wesentlichen um den reifeninnenseitigen Endabschnitt des Wulstverstärkers 7 herumführt und sich über eine Länge $las_{G2}$ erstreckt, welche etwa 10 mm beträgt, und sich über eine Breite $bas_{G2}$ erstreckt, welche etwa 2,5 mm beträgt.

Fig. 2b zeigt beispielhaft, wie die Erstreckungslängen $l_{G12A}$, $l_{G12B}$ und $l_{G12C}$ der Profilglieder 12a, 12b und 12c des Gabelprofils 12 unter Bezug auf den Schwerpunkt $s_{G2}$ bestimmt werden. Der Schwerpunkt $s_{G2}$ sollte sich bevorzugt im Bereich $as_{G2}$ befinden, wie in der Beschreibung zu Fig. 2 erläutert.

Die Gummimischungen für die Gabelprofile 11 und 12 können gezielt angepasst werden, um ihre wichtigen mechanischen Eigenschaften, beispielsweise hinsichtlich der Elastizität der Gummimischungen und der Weiterreißfestigkeit, sicherzustellen, und auch um die chemischen Funktionen der Gummimischungen der Gabelprofile 11, 12 zu gewährleisten, wie etwa die Haftvermittlung zu Festigkeitsträgern an den Schnittkanten und die Anbindung an die unmittelbar benachbarten Bauteile im Reifen.

Für die Gabelprofile 11, 12 werden bevorzugt Gummimischungen verwendet, welche eine hohe Vernetzungsdichte, ferner eine Reißfestigkeit nach DIN 53504 von etwa $6,0$ N/mm² bis etwa $25,0$ N/mm², bevorzugt im Bereich von etwa $18,0$ N/mm² bis etwa $25,0$ N/mm², eine Reißdehnung nach DIN 53504 von etwa 200 % bis etwa 600 %, bevorzugt im Bereich von 420 % bis 480 % und einen Spannungswert im Zugversuch nach DIN 53504 bei 300 % Zugdehnung von $4,0$ N/mm² bis $25,0$ N/mm², bevorzugt im Bereich von etwa $12,5$ N/mm² bis etwa $14,5$ N/mm², aufweisen. Im Idealfall beträgt ferner die Rückprallelastizität der Gummimischung nach DIN 53512 in der Größenordnung von etwa 35 % bis etwa 75 %, bevorzugt aber etwa 47 % und die Shore-Härte nach DIN 53505 etwa 45 Shore-A bis etwa 95 Shore-A, bevorzugt im Bereich von 75 Shore-A.

Bevorzugt wird eine Gummimischung für das Gabelprofil 11, 12 verwendet, welche als Füllstoff eine gefällte Kieselsäure in einem Anteil von etwa 6 Massenprozent bis etwa 34 Massenprozent, bezogen auf die Elastomermischung, mit einer BET-Oberfläche nach ISO 5794 zwischen 80 m²/g und 310 m²/g, bevorzugt mit einer BET-Oberfläche nach ISO 5794 zwischen 100 m²/g und 250 m²/g, mit einer CTAB-Oberfläche nach ASTM D 3765 zwischen 100 m²/g und 300 m²/g, bevorzugt mit einer CTAB-Oberfläche nach ASTM D 3765 zwischen 100 m²/g und 250 m²/g, und eine DBP-Absorption zwischen 100 ml/100g und 350 ml/100g, bevorzugt eine DBP-Absorption zwischen 150 ml/100g und 300 ml/100g, gemäß ASTM D 1208, aufweist. Die Kieselsäure wird vorzugsweise über eine Silanisierungsreaktion mit einem di- oder mehrfunktionellen Organosilan, bevorzugt mit Bis(triethoxysilylpropyl)tetrasulfan, dem Kautschuknetzwerk zur Verfügung gestellt.

Das Organosilan oder die Organosilane und die Kieselsäure oder ein Teil der Kieselsäure werden bevorzugt vor dem Einbringen in die Elastomermischung miteinander gemischt oder zur Reaktion gebracht.

Als weiteren Füllstoff bzw. als weitere Füllstoffe können handelsübliche Ruße oder auch andere anorganische Füllstoffe zugesetzt werden. Derartige Ruße sind beispielsweise SRF (Semi Reinforcing Furnace), GPF (General Purpose Furnace), FEF (Fast Extrusion Furnace), HAF (High Abrasion Furnace) oder andere. Bevorzugt werden Ruße mit einer CTAB-Oberfläche nach ASTM D 3765 von etwa 80 m²/g bis etwa 95 m²/g, einer DBP-Absorption nach ASTM D 2414 von etwa 65 ml/100g bis etwa 130 ml/100g und einer Schüttdichte nach ASTM D 1513 von etwa 320 g/dm³ bis etwa 460 g/dm³. Als Vulkanisationsmittel werden Schwefelverbindungen eingesetzt, insbesondere Morpholindisulfid, Alkylaryldisulfide, Tetraalkylthiuramdisulfide, Dithiocarbamate oder Schwefel. Als Vulkanisationsbeschleuniger eignen sich insbesondere Thiazolverbindungen wie z.B. Benzthiazyl-2-dicyclohexyl-sulfenamid, Guanidinverbindungen wie z.B. Diphenylguanidin, Imidazolinverbindungen wie z.B. 2-Mercaptoimidazolin, Thioharnstoffverbindungen wie z.B. Diethylthioharnstoff, Thiuramverbindungen wie z.B. Tetramethylthiuram-Sulfide, Dithiocarbamatverbindungen, Xanthate und dergleichen.

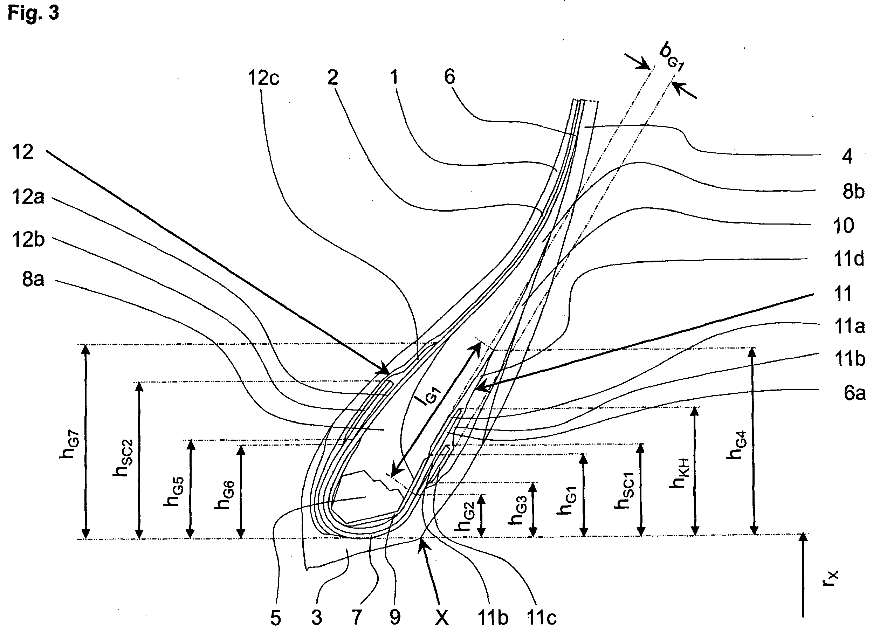

Fig. 3 zeigt einen Querschnitt durch einen der Wulstbereiche eines LKW-Reifens für Steilschulterfelgen. Zu den in der Figur 3 gezeigten Reifenbauteilen gehören eine Innenschicht 1 und eine Kappe 2 bzw. ein Füllprofil, ein den Endabschnitt der Innenschicht 1 und der Kappe 2 außen überlappendes, in Kontakt mit der nicht gezeigten Felge kommendes Felgenprofil 3, eine Seitenwand 4, welche den reifenaußenseitigen Endabschnitt des Felgenprofils 3 außen überlappt, ein Wulstkern 5, eine Karkasseinlage 6, welche den Wulstkern 5 umläuft und reifenaußenseitig den Karkasshochschlag 6a bildet, ein zwischen der Karkasseinlage 6 auf der einen Seite und der Kappe 2 und dem Felgenprofil 3 auf der anderen Seite, großteils in Kontakt mit diesen Bauteilen verlaufender Wulstverstärker 7, zwei auf dem Wulstkern 5 sitzende Kernprofile 8a und 8b, ein den Wulstkern 5 im Wesentlichen parallel zur Karkasseinlage 6, in Kontakt mit der Karkasseinlage 6 stehender und den Wulstkern 5 umlaufender Flipper 9 und ein Wulstpolster 10, welcher reifenaußenseitig, zwischen dem Kernprofil 8b und einem Gabelprofil 11 auf der einen Seite und dem Endabschnitt der Seitenwand 4 und dem Felgenprofil 3 auf der anderen Seite, verläuft.

Die Innenschicht 1, die Kappe 2, das Felgenprofil 3, die Seitenwand 4, die beiden Kernprofile 8a und 8b sowie der Wulstpolster 10 sind Gummiprofile, welche aus unterschiedlichen und für ihren jeweiligen Einsatzort geeigneten Gummimischungen, die gemäß dem Stand der Technik ausgeführt sein können, bestehen. Insbesondere bei Nutzfahrzeugreifen wird der dargestellte geschichtete Aufbau aus Innenschicht 1 und Kappe 2 gewählt. Hierbei stellen die Innenschicht 1 und die hierfür verwendete Elastomermischung die Luftdichtigkeit des Reifens im Betrieb sicher. Die Kappe 2 und die hierfür verwendete Elastomermischung ihrerseits verfügen über eine hohe mechanische Belastbarkeit im Betrieb und verhindern dauerhaft den Kontakt zwischen der Innenschichtmischung sowie den Festigkeitsträgern der Karkasseinlage 6 und weiteren Bauteilen. Der Wulstkern 5 besteht in an sich bekannter Weise aus Stahlseilen oder Stahldrähten und kann einen der üblichen Querschnitte aufweisen. Bevorzugt werden für Steilschulterreifen polygonale Wulstkerne 5 verwendet, wie beispielhaft in den Figuren 3, 4 und 5 dargestellt. Die Karkasseinlage 6 besteht aus in eine Gummierungsmischung eingebetteten Festigkeitsträgern, insbesondere Stahlkorden, welche in radialer Richtung orientiert sind und somit im rechten Winkel bzw. im Wesentlichen im rechten Winkel zur Umfangsrichtung des Reifens verlaufen. Der Flipper 9 kann in bekannter Weise ein in eine Gummierungsmischung eingebettetes textiles Gewebe sein, dessen Festigkeitsträger zur Umfangsrichtung unter einem Winkel von ca. 38° bis zu ca. 52°, bevorzugt unter einem Winkel von ca. 40° bis zu ca. 47°, verlaufen. Bevorzugt werden für den Flipper 9 Festigkeitsträger verwendet, die aus mehrfilamentigen, verseilten, textilen Korden bestehen, die ihrerseits parallel zueinander angeordnet sind. Die Fadendichte soll mindestens 80 Korde je 100 mm Breite unter dem Wulstkern 5 betragen. Bevorzugt sind Fadendichten von ca. 80 Korden je 100 mm Breite unter dem Wulstkern 5 bis zu ca. 110 Korden je 100 mm Breite unter dem Wulstkern 5. Der Korddurchmesser der Festigkeitsträgers im Flipper 9 soll zwischen ca. 0,28 mm bis zu ca. 0,92 mm betragen, insbesondere ca. 0,5 mm bis zu ca. 0,6 mm. Der Festigkeitsträger des Flippers 9 kann sowohl aus einem Polyamid als auch aus einem Polyester, Polypeptid, Polyglykosid oder aus einem Polyolefin oder aus Mischungen der genannten Materialien hergestellt sein. Bevorzugt wird ein Festigkeitsträger aus Polyamid oder Polyester verwendet. Ersatzweise kann als Flipper 9 auch eine vulkanisierbare, hochgefüllte Elastomermischung eingesetzt werden. Der Wulstverstärker 7 besteht aus ein oder mehreren Lagen in eine Gummierungsmischung eingebetteten Stahlkorden, welche zu den Stahlkorden in der Karkasseinlage 6 unter einem Winkel von ca. 64° bis zu ca. 80°, bevorzugt unter einem Winkel von ca. 68° bis zu ca. 76°, verlaufen. Der Wulstverstärker 7 wird insbesondere aus mehrfilamentigen, verseilten Stahlkorden aufgebaut, die im Wesentlichen parallel verlaufen und eine Fadendichte zwischen ca. 36 Korden je 100 mm Breite unter dem Wulstkern 5 und ca. 68 Korden je 100 mm Breite unter dem Wulstkern 5 aufweisen. Bevorzugt sind Fadendichten von ca. 48 Korden je 100 mm Breite unter dem Wulstkern 5 bis zu ca. 58 Korden je 100 mm Breite unter dem Wulstkern 5. Der Korddurchmesser dieses mehrfilamentigen, verseilten Stahlkordes kann hierbei zwischen ca. 0,22 mm bis zu ca. 1,98 mm betragen, bevorzugt beträgt der Korddurchmesser dieses Festigkeitsträgers von ca. 1,00 mm bis zu ca. 1,40 mm.

Wie bereits erwähnt, können als Wulstverstärker 7 auch zwei oder mehr Lagen aus in eine Gummierungsmischung eingebetteten Stahlkorden eingesetzt werden, wobei entweder die Stahlkorde über alle Lagen im Wesentlichen zueinander parallel verlaufen oder mindestens zwei zueinander kreuzende Lagen vorgesehen sind, wobei die Stahlkorde in jeder dieser Lagen im Wesentlichen parallel zueinander verlaufen. Die Stahlkorde dieser Lagen verlaufen unter einem Winkel zur Umfangsrichtung von mindestens 14° und höchstens 42°, bevorzugt sind Winkelstellungen von 20° bis zu einschließlich 32° zur Umfangsrichtung. Die Fadendichte der Festigkeitsträger beträgt in den einzelnen Lagen bis zu 123 Korde je 100 mm Breite unter dem Wulstkern 5, der Durchmesser der Stahlkorde beträgt hierbei zwischen 0,14 mm bis zu 1,89 mm.

Alternativ können im Wulstverstärker 7 auch textile Festigkeitsträger eingesetzt werden, welche als mehrfilamentige, verseilte Korde ausgebildet sind. Diese textilen Korde verlaufen im Wesentlichen parallel zueinander und weisen einen Winkel zur Umfangsrichtung von mindestens 12° und höchstens 42° auf. Der Durchmesser der Festigkeitsträger beträgt bei der hier beschriebenen Verwendung von verseilten, textilen Korden mindestens ca. 0,14 mm bis höchstens ca. 2,13 mm. Werden mehrere Lagen aus in eine vulkanisierbare Elastomermischung eingebetteten verseilten, textilen Korden eingesetzt, so beträgt der Durchmesser der Festigkeitsträger mindestens ca. 0,14 mm und höchstens 1,22 mm. Bei Einsatz von zwei oder mehr Lagen aus in eine Gummierungsmischung eingebetteten textilen Korden verlaufen diese textilen Korde in jeder Lage im Wesentlichen parallel zueinander.

Die nachstehend angegebenen Höhen sind auf den Felgeneckpunkt X des Felgenprofils 3 bezogen und sind in radialer Richtung ermittelt. Mit $r_X$ ist in Fig. 3 der Radius des Felgeneckpunktes X bezeichnet. Der Wulstverstärker 7 ist derart ausgeführt und angeordnet, dass sein reifeninnenseitiges Ende bis auf eine Höhe $h_{SC2}$ reicht, welche zwischen ca. 19 mm und ca. 56 mm beträgt. Das reifenaußenseitige Ende des Wulstverstärkers 7 befindet sich in einer Höhe $h_{SC1}$, welche zwischen ca. 18 mm und ca. 27 mm beträgt. Das Ende des Karkasshochschlages 6a reicht bis in eine Höhe $h_{KH}$, welche zwischen 28 mm und 38 mm beträgt. Dabei ist die Höhe $h_{KH}$ um mindestens 2 mm größer als die Höhe $h_{SC1}$, bevorzugt ist die Höhe $h_{KH}$ um 6 mm bis 12 mm größer als die Höhe $h_{SC}$.

Ein gemäß der Figur 1 einteilig und mehrgliedrig ausgeführtes Gabelprofil 11 umfasst sowohl den Endabschnitt und die Schnittkante des Karkasshochschlages 6a als auch den Endabschnitt und die Schnittkante des Wulstverstärkers 7. Die drei sich in gleicher Richtung erstreckenden Profilglieder 11a, 11b, 11c fassen die Endabschnitte des Karkasshochschlages 6a und des Wulstverstärkers 7 ein, das weitere, sich von der Schnittkante des Hochschlages 6a in entgegengesetzte Richtung erstreckende vierte Profilglied 11d, verläuft ein Stück zwischen dem Kernprofil 8b und dem Wulstpolster 10. Vom Profilglied 11d gabeln sich die zwei Glieder 11a, 11b ab, welche den Endabschnitt des Karkasshochschlages 6a einschließen. Vom Profilglied 1 1b gabelt sich das Profilglied 11c ab, welches gemeinsam mit dem Profilglied 11b den Endabschnitt des Wulstverstärkers 7 einfasst. Die Profilglieder 11a, 11b, 11c sind schmale, bis zu 1,9 mm breite Gummiteile.

Die radial inneren Enden der drei Profilglieder 11a, 11b, 11c können auf im Wesentlichen gleicher Höhe enden, insbesondere endet das Profilglied 11a in einer Höhe $h_{G1}$, welche zwischen 8 mm und 25 mm beträgt, das Profilglied 11b in einer Höhe $h_{G2}$, welche zwischen 5 mm und 21 mm beträgt und das Profilglied 11c in einer Höhe $h_{G3}$, welche zwischen 6 mm und 22 mm beträgt, wobei $h_{G2}$ höchstens 5 mm kleiner ist als $h_{G3}$. In jedem Fall erstrecken sich sämtliche Profilglieder 11a bis 11c über eine Länge von mindestens 5 mm entlang des Wulstverstärkers 7 bzw. des Hochschlages 6a, das mittlere Profilglied 11b über mindestens 5 mm in den Spalt zwischen dem Wulstverstärker 7 und dem Hochschlag 6a. Das vierte, sich in radialer Richtung von der Schnittkante des Hochschlages 6a erstreckende Profilglied 11d reicht bis auf eine Höhe $h_{G4}$, welche zwischen 36 mm und 63 mm beträgt. Insgesamt weist das Gabelprofils 11 eine Gesamtlänge $l_{G1}$, auf, die maximal 76 mm beträgt. An seiner breitesten Stelle weist das Gabelprofil 11 eine Gesamtbreite $b_{G1}$ auf, welche 8,6 mm nicht übersteigt. Das gesamte Gabelprofil 11 nimmt ferner eine Querschnittsfläche ein, welche zwischen 66,8 mm$^2$ und 149,7 mm$^2$ beträgt. Die Erstreckungslänge $l_{G11D}$ des vierten Profilgliedes 11d sollte die größte Erstreckung eines der drei entgegengesetzt verlaufende Profilglieder 11a, 11b, 11c um nicht mehr als 17 mm überragen. Als Bezugspunkt für die Ermittlung der Erstreckungslängen $l_{G11A}$, $l_{G11B}$, $l_{G11C}$ und $l_{G11D}$ der Profilglieder 11a, 11b, 11c und 11d ist der in der Fig.1 und in Fig. 1b dargestellte und bereits erwähnte geometrische Schwerpunkt $s_{G1}$ des mehrgliedrigen Gabelprofiles 11 maßgeblich. Die Ermittlung der Längen $l_{G11A}$, $l_{G11B}$, $l_{G11C}$ und $l_{G11D}$ ist in der Figur 1b beispielhaft dargestellt. Der geometrische Schwerpunkt $S_{G1}$ sollte sich im Feld $as_{G1}$ befinden, das die bestmöglichen Positionen für diesen geometrischen Schwerpunkt $s_{G1}$ beinhaltet. Das Gabelprofil 11 ist derart in die umgebenden Wulstbauteile eingebunden, dass seine äußeren Flächen mit Gummimischungen in Kontakt sind.

Das Gabelprofil 11 stellt durch die Einfassung der Endabschnitte des Hochschlages 6a und des Wulstverstärkers 7 sicher, dass zwischen den Schnittkanten dieser Bauteile eine bestimmte, durch die Auslegung des Gabelprofils 11 einstellbare und im fertig vulkanisierten Reifen nicht mehr veränderbare Distanz verbleibt. Diese Maßnahme verbessert die Reifenhaltbarkeit durch die Vermeidung von strukturellen Ausfällen im Wulstbereich und erhöht somit die Lebenserwartung des Reifens.

Der reifeninnenseitige Endabschnitt des Wulstverstärkers 7, welcher bis auf eine Höhe $h_{SC2}$ reicht, ist von zwei Profilgliedern 12a, 12b eines zweiten, mehrgliedrig einteiligen Gabelprofils 12, welches gemäß Fig. 2 ausgeführt ist, umschlossen. Das dritte Profilglied 12c verläuft, in entgegengesetzter Richtung zu den Profilgliedern 12a, 12b und entlang der Karkasseinlage 6 und somit im Wesentlichen in Verlängerung des Wulstverstärkers 7. Das weiter reifenaußenseitig verlaufende Profilglied 12a des Gabelprofils 12 endet in einer Höhe $h_{G5}$ von 8 mm bis 30 mm, das Profilglied 12b in einer Höhe $h_{G6}$ von 6 mm bis 42 mm und das Profilglied 12c reicht bis auf eine Höhe $h_{G7}$, welche zwischen 40 mm und 77 mm beträgt. Das gesamte Gabelprofil 12 nimmt eine Querschnittsfläche ein, welche zwischen 37,3 mm$^2$ und 82,4 mm$^2$ beträgt. Als Bezugspunkt für die Ermittlung der Erstreckungslängen $l_{G12A}$, $l_{G12B}$ und $l_{G12C}$ der Profilglieder 12a, 12b und 12c ist der in der Fig. 2 und der Fig. 2b dargestellte und bereits erwähnte geometrische Schwerpunkt $s_{G2}$ des mehrgliedrigen Gabelprofiles 12 maßgeblich. Die Ermittlung der Längen $l_{G12A}$, $l_{G12B}$ und $l_{G12C}$ ist in der Figur 2b beispielhaft dargestellt. Der geometrische Schwerpunkt $S_{G2}$ sollte sich im Feld $as_{G2}$ befinden, das die bestmöglichen Positionen für diesen geometrischen Schwerpunkt $s_{G2}$ beinhaltet. Das Gabelprofil 12 ist derart in die umgebenden Wulstbauteile eingebunden, dass seine äußeren Flächen mit Gummimischungen in Kontakt sind.

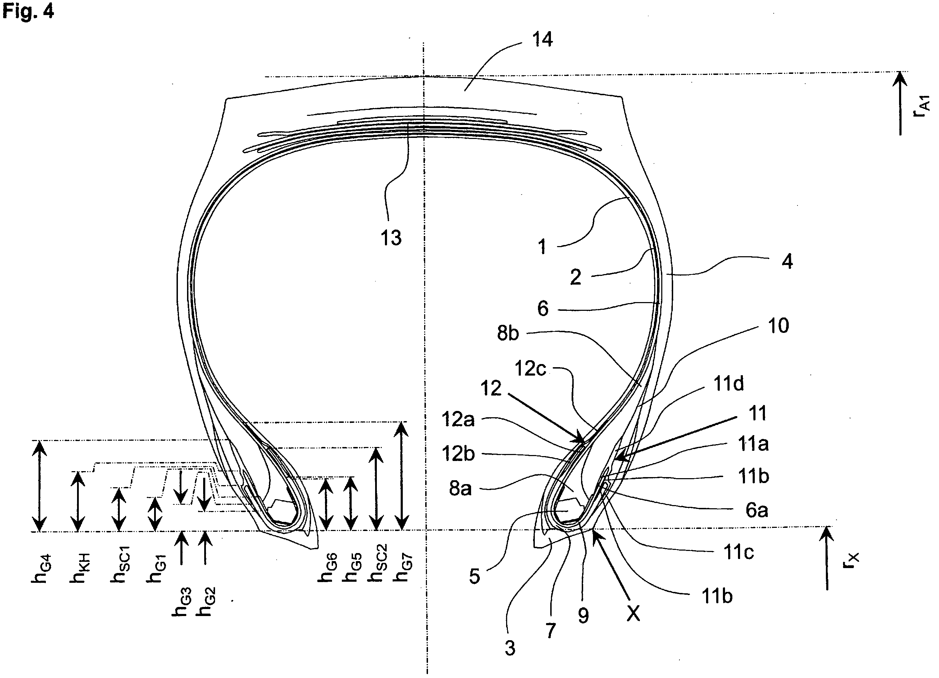

Fig. 4 zeigt einen radialen Querschnitt durch einen LKW-Reifen für Steilschulterfelgen mit Gabelprofilen 11 und 12 in den Wulstbereichen. Neben dem Radius $r_X$ des Felgeneckpunktes X des Felgenprofils 3 ist auch der Radius $r_{A1}$ eingezeichnet, der den äußeren Radius des Reifens im unmontierten Zustand angibt. Neben den bereits erwähnten Reifenbauteilen sind in Fig. 4 im Zenit des Reifens die Gürtelverstärkung 13 und der Laufstreifen 14 bezeichnet, welche auf herkömmliche Weise ausgeführt sein können. In der linken Reifenseite sind die Höhen $h_{G2}$, $h_{G3}$, $h_{G1}$, $h_{SC1}$, $h_{KH}$, $h_{G4}$ sowie $h_{G6}$, $h_{G5}$, $h_{SC2}$ und $h_{G7}$ eingezeichnet, alle bezogen auf den Felgeneckpunkt X mit dem Radius $r_X$ des Felgenprofils 3 des vulkanisierten Reifens. In der rechten Reifenseite sind die Bauteile bezeichnet.

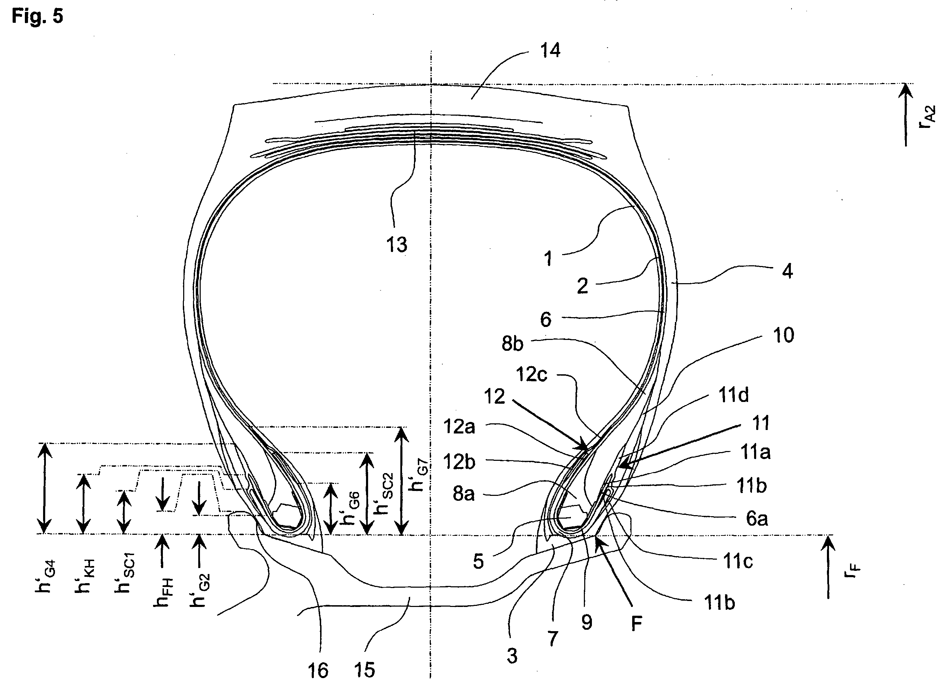

Fig. 5 zeigt einen radialen Querschnitt eines Reifens gemäß Fig. 4, welcher auf einer passenden Steilschulterfelge 15 unter den Bedingungen montiert ist, dass der Reifeninnendruck dem äußeren Druck entspricht, wobei der Reifen an der Flanke 16 der Steilschulterfelge 15 anliegt. Die Steilschulterfelge 15 wird nach Vorgabe der E.T.R.T.O., der T.R.A. oder von Reifenherstellerangaben ausgewählt. Im Zenit des Reifens sind die Gürtelverstärkung 13 sowie der Laufstreifen 14 bezeichnet. Es ist der Radius $r_{A2}$ des montierten und auf den Felgensitzflächen der Steilschulterfelge 15 gesetzten Reifens eingezeichnet, wobei sich der Radius $r_{A2}$ in der Regel vom Radius $r_{A1}$ unterscheidet. Angegeben ist ferner der Radius $r_F$ zum Felgeneckpunkt F der Steilschulterfelge 15. Dieser Radius $r_F$ ist in der Regel etwas größer als der Radius $r_X$ des Felgeneckpunktes X des Felgenprofils 3 des Reifens. Durch den Bezugspunkt F ändern sich die Höhen $h_{G1}$, $h_{G2}$, $h_{G3}$, $h_{SC1}$, $h_{KH}$, $h_{G4}$, $h_{G5}$, $h_{G6}$, $h_{SC2}$ und $h_{G7}$ in ihrem Wert, angegeben sind wegen der besseren Übersichtlichkeit die Höhen $h'_{G2}$, $h'_{SC1}$, $h'_{KH}$, $h'_{G4}$, $h'_{G6}$, $h'_{SC2}$ und $h'_{G7}$ sowie die Höhe $h_{FH}$, die die Höhe des Felgenhornes 16 relativ zum Felgeneckpunkt F der Steilschulterfelge 15 angibt. Die Höhen $h'_{SC1}$ des Wulstverstärkers 7 und $h'_{KH}$ des Lagenhochschlages 6a der Einlage 6 sind, eine offene Wulstkonstruktion bildend, größer als $h_{FH}$. Die Höhe $h'_{G2}$ des Profilgliedes 11b des mehrgliedrigen, einteiligen Gabelprofiles 11 ist um etwa 4 mm bis 10 mm kleiner als die Höhe $h_{FH}$ der Felgenflanke mit dem Bezug auf den Felgeneckpunkt F der Steilschulterfelge mit dem Radius $r_F$. Es gilt als idealer Bereich:

$$3,1 \text{ mm} \leq (h_{FH} - h'_{G2}) \leq 8,3 \text{ mm}$$

Für die Differenz zwischen der Höhe $h'_{G4}$ des Profilgliedes $h'_{G4}$ des Gabelprofils 11 und der Höhe $h_{FH}$ des Felgenhornes 16 gilt für einen auf einer passenden Steilschulterfelge montierten Reifen:

$$21,4 \text{ mm} \leq (h'_{G4} - h_{FH}) \leq 50,3 \text{ mm}$$

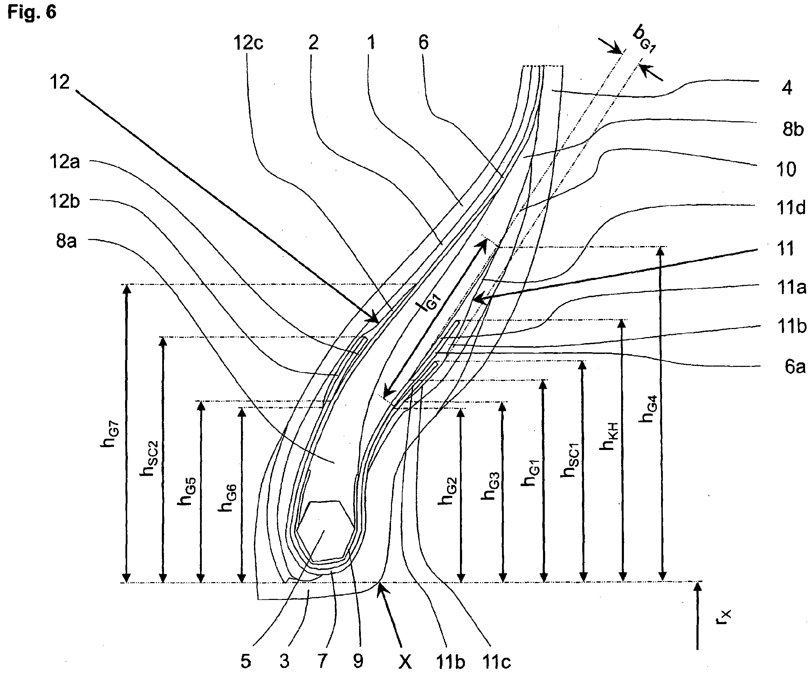

Fig. 6 zeigt einen Querschnitt durch einen der Wulstbereiche eines LKW-Reifens für Schrägschulterfelgen. Die Reifenbauteile und deren Beschreibungen entsprechen jenen der Fig. 3 und wie zu Fig. 3 beschrieben. Zu berücksichtigen ist hier, dass die Gummimischung, die für die Innenschicht 1 verwendet wird, bei Schlauchreifen nicht notwendigerweise eine besondere Luftdichtigkeit aufweisen muss. Für Schlauchreifen muss die Innenschicht 1 eine hohe mechanische Belastbarkeit, insbesondere Abriebs- und Schnittfestigkeit, aufweisen. Der Wulstkern 5 wird in der Regel als polygonaler Drahtkern, der aus Stahlseilen oder Stahldrähten besteht, aufgebaut. Alternativ zum polygonalen Drahtkern kann der Wulstkern 5 aber auch als Kabelkern aufgebaut werden. Alle weiteren in der Beschreibung der Bauteile des in der Fig. 3 dargestellten Steilschulterreifens gemachten Angaben gelten sinngemäß auch für die Beschreibung der Bauteile des Schrägschulterreifens der Fig. 6.

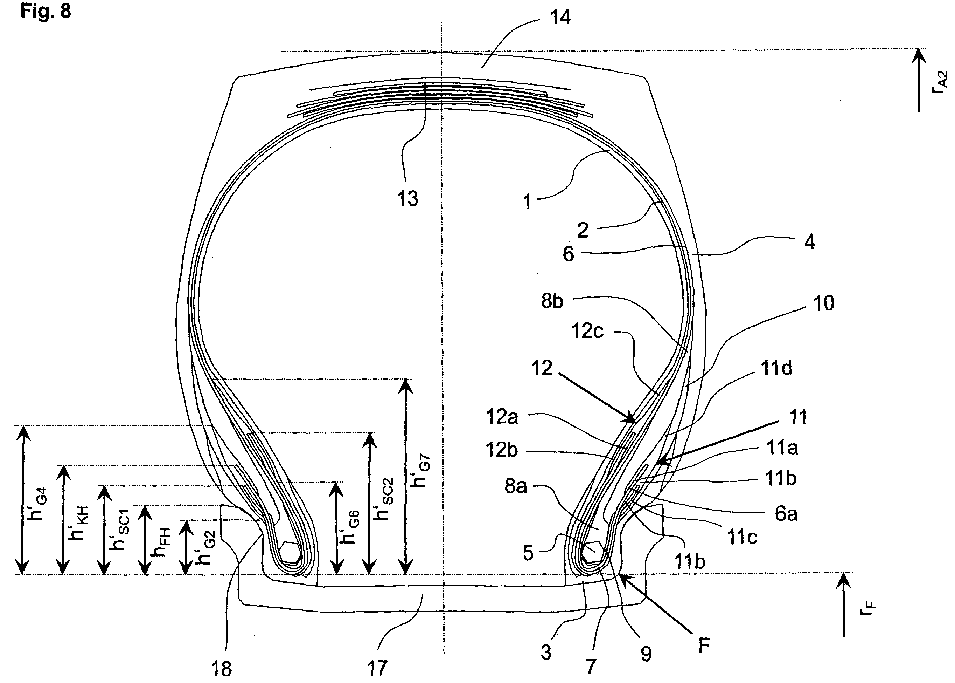

Die nachstehend angegebenen Höhen zu dem in der Fig. 6 dargestellten Schrägschulterreifen sind auf den Felgeneckpunkt X des Felgenprofils 3 bezogen und sind in radialer Richtung ermittelt. Der Radius $r_X$ des Felgeneckpunktes X ist in der Zeichnung des Schrägschulterreifens der Fig. 6 eingetragen. Der Wulstverstärker 7 ist derart ausgeführt und angeordnet, dass sein reifeninnenseitiges Ende entweder unter dem Wulstkern 5 endet oder dass sein reifeninnenseitiges Ende bis auf eine Höhe $h_{SC2}$ reicht, welche höchstens ca. 91 mm beträgt. Wenn das reifeninnenseitige Ende des Wulstverstärkers 7 nicht unter dem Wulstkern 5 endet, sondern um den Wulstkern 5 reifeninnenseitig herumgeführt wird, dann beträgt die Höhe $h_{SC2}$ vorzugsweise mindestens ca. 16 mm, gemessen in radialer Richtung. Das reifenaußenseitige Ende des Wulstverstärkers 7 befindet sich in einer Höhe $h_{SC1}$, welche zwischen ca. 20 mm und ca. 77 mm beträgt. Das Ende des Karkasshochschlages 6a reicht bei Schrägschulterreifen bis in eine Höhe $h_{KH}$, welche zwischen ca. 30 mm und ca. 91 mm beträgt. Dabei ist bei Schrägschulterreifen die Höhe $h_{KH}$ um mindestens 6 mm größer als die Höhe $h_{SC1}$, bevorzugt ist die Höhe $h_{KH}$ zwischen 6 mm bis ca. 14 mm höher ist als die Höhe $h_{SC1}$. Generell gilt, dass auch bei Schrägschulterreifen der Karkasshochschlag 6a in Verbindung mit der Karkasseinlage 6 eine offene Wulstkonstruktion bildet, bei der auch die Höhen $h_{KH}$ und $h_{SC1}$ größer sind als die Höhe $h_{FH}$, siehe Fig. 8, in welcher die Höhen $h'_{KH}$, $h'_{SC1}$

und $h_{FH}$ zu finden sind, wobei die Unterschiede zwischen $h_{KH}$ und $h'_{KH}$ sowie $h_{SC1}$ und $h'_{SC1}$ jeweils kleiner als 2 mm sind. Das Ende des Karkasshochschlages 6a reicht bei Schrägschulterreifen der Felgengrößen 15 und 16 bis in eine Höhe $h_{KH}$, welche zwischen ca. 30 mm und ca. 39 mm beträgt, bei Schrägschulterreifen der Felgengrößen 20, 22 und 24 reicht das Ende des Karkasshochschlages 6a bis in eine Höhe $h_{KH}$, welche zwischen ca. 40 mm bis ca. 91 mm beträgt.

Das in den Figur 1 dargestellte Gabelprofil 11 wird bei Schrägschulterreifen ebenfalls einteilig mehrgliedrig ausgeführt und umfasst auch bei Schrägschulterreifen sowohl den Endabschnitt als auch die Schnittkante des Karkasshochschlages 6a als auch den Endabschnitt und die Schnittkante des Wulstverstärkers 7. Das Gabelprofils 11 gliedert sich in vier Profilglieder 11a, 11b, 11c und 11d, welche als schmale, bis zu 1,9 mm breite Gummiteile ausgeführt sind.

Die radial inneren Enden der drei Profilglieder 11a, 11b bunt 11c können auf im Wesentlichen gleicher Höhe enden, insbesondere endet das Profilglied 11a in einer Höhe $h_{G1}$, welche zwischen 10 mm und 75 mm beträgt. Bei Schrägschulterreifen der Felgengrößen 15 und 16 beträgt die Höhe $h_{G1}$ zwischen ca. 10 mm und ca. 28 mm, bei Schrägschulterreifen der Felgengrößen 20, 22 und 24 beträgt die Höhe $h_{G1}$ zwischen ca. 18 mm und ca. 75 mm. Das Profilglied 11b endet in einer Höhe $h_{G2}$, welche zwischen 5 mm und 58 mm beträgt. Bei Schrägschulterreifen der Felgengrößen 15 und 16 beträgt die Höhe $h_{G2}$ zwischen ca. 5 mm und ca. 24 mm, bei Schrägschulterreifen der Felgengrößen 20, 22 und 24 beträgt die Höhe $h_{G2}$ zwischen ca. 14 mm und ca. 58 mm. Das Profilglied 11c endet in einer Höhe $h_{G3}$, welche zwischen 6 mm und 59 mm beträgt. Bei Schrägschulterreifen der Felgengrößen 15 und 16 beträgt die Höhe $h_{G3}$ zwischen ca. 6 mm und ca. 25 mm, bei Schrägschulterreifen der Felgengrößen 20, 22 und 24 beträgt die Höhe $h_{G3}$ zwischen ca. 10 mm und ca. 59 mm. In jedem Fall erstrecken sich sämtliche Profilglieder 11a bis 11c über eine Länge von mindestens 5 mm entlang des Wulstverstärkers 7 beziehungsweise des Karkasshochschlages 6a, das mittlere Profilglied 11b über mindestens 5 mm in den Spalt zwischen dem Wulstverstärker 7 und dem Karkasshochschlag 6a. Das vierte Profilglied 11d, welches sich radial nach außen erstreckt, reicht bis auf eine Höhe $h_{G4}$, welche zwischen 40 mm und 104 mm beträgt. Bei Schrägschulterreifen der Felgengrößen 15 und 16 beträgt die Höhe $h_{G4}$ zwischen ca. 40 mm und ca. 49 mm, bei Schrägschulterreifen der Felgengrößen 20, 22 und 24 beträgt die Höhe $h_{G4}$ zwischen ca. 50 mm und ca. 104 mm. Auch hier gilt, dass die Erstreckungslänge $l_{G11D}$ des vierten Profilglieder 11d die größte Erstreckungslänge eines der drei entgegengesetzt verlaufenden Profilglieder 11a, 11b, 11c um nicht mehr als 17 mm überragen sollte.

Alle hier angegebenen Werte zu den Höhen $h_{G1}$ und $h_{G2}$ beziehen sich auf den Felgeneckpunkt X mit dem Radius $r_X$ des Wulstes beziehungsweise des Wulstprofiles 3 und sind in radialer Richtung gemessen.

Zu berücksichtigen ist bei Schrägschulterreifen, daß die Felgen, je nach Felgengröße, über unterschiedlich große Felgenhornhöhen verfügen. Desweiteren gibt es verschiedene Ausführungen an Schrägschulterfelgen, wie zum Beispiel Schrägschulterfelgen nach DIN 7820, Halbtiefbettfelgen nach DIN 7826 und WdK LL28, Schrägschulterfelgen nach DIN 7848, Tiefbettfelgen nach DIN 78.18, Tiefbettfelgen nach DIN 7817 und Tiefbettfelgen nach DIN 7827. Dies führt, unter Bezug auf den Felgeneckpunkt X mit dem Radius $r_X$ des vulkanisierten Reifens, zu unterschiedlichen Höhen für $h_{KH}$ sowie $h_{SC1}$ und $h_{SC2}$. Damit ändern sich auch die Höhen $h_{G1}$, $h_{G2}$, $h_{G3}$, $h_{G4}$, $h_{G5}$, $h_{G6}$ und $h_{G7}$ jeweils mit der jeweiligen Reifengröße und der damit einzusetzenden Fahrzeugfelge und deren spezifischer Höhe des Felgenhornes.

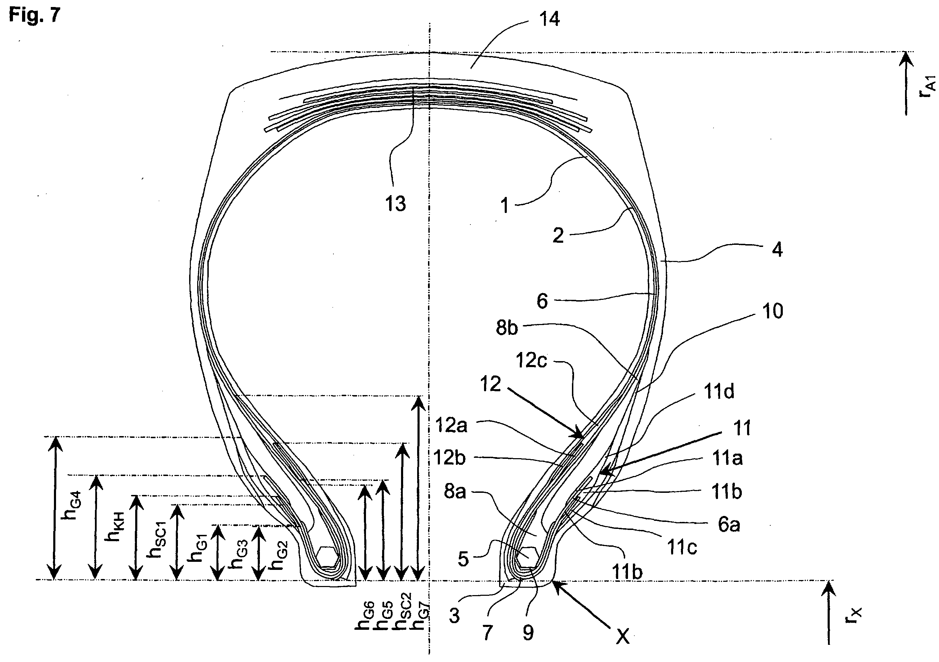

Fig. 7 zeigt einen radialen Querschnitt durch einen LKW-Reifen für Schrägschulterfelgen mit Gabelprofilen 11 und 12 in den Wulstbereichen. Neben dem Radius $r_X$ des Felgeneckpunktes X des Felgenprofils 3 ist der Radius $r_{A1}$ angegeben, der den äußeren Radius des Reifens im unmontierten Zustand angibt. Neben den bereits erwähnten Reifenbauteilen sind im Zenit des Reifens die Gürtelverstärkung 13 und der Laufstreifen 14 gezeigt, welche auf herkömmliche Weise ausgeführt sein können. In der linken Reifenseite sind die bereits erwähnten Höhen $h_{G2}$, $h_{G3}$, $h_{G1}$, $h_{SC1}$, $H_{KH}$, $h_{G4}$ sowie $h_{G6}$, $h_{G5}$, $h_{SC2}$ und $h_{G7}$, alle bezogen auf den Felgeneckpunkt X mit dem Radius $r_X$, eingezeichnet. In der rechten Reifenseite sind die Bauteile bezeichnet. Der Felgeneckpunkt X des Felgenprofils 3 ist mit dem Radius $r_X$ eingezeichnet.

Fig. 8 zeigt einen radialen Querschnitt des Reifens gemäß Fig. 7 nach Montage auf einer passenden Schrägschulterfelge 17. Für den montierten Reifen gilt, dass der Reifeninnendruck dem äußeren Druck entspricht und dass der Reifen an der Flanke 18 der Schrägschulterfelge 17 anliegt. Die Auswahl der Schrägschulterfelge 17 erfolgt entsprechend den Vorgaben der E.T.R.T.O., der T.R.A. oder des Reifenherstellers. Angegeben sind in der rechten Reifenhälfte die Bauteile und ihre Bezugszeichen sowie der Felgeneckpunkt F mit dem Radius $r_F$ der Schrägschulterfelge 17. Des Weiteren ist der Radius $r_{A2}$ des montierten und auf den Felgensitzflächen der Schrägschulterfelge 17 gesetzten Reifens eingezeichnet, wobei der Radius $r_{A2}$ in der Regel vom Radius $r_{A1}$ verschieden ist. Angegeben ist ferner der Radius $r_F$ zum Felgeneckpunkt F der Schrägschulterfelge 17. Der Radius $r_F$ ist in der Regel etwas größer als der Radius $r_X$ des Felgeneckpunktes X des Felgenprofils 3 des Reifens. Die entsprechenden Höhen ändern sich bei montiertem Reifen, analog zu den Erläuterungen zu Fig. 5. Wegen der besseren Übersichtlichkeit sind in Fig. 8 nur die Höhen $h'_{G2}$, $h'_{SC1}$, $h'_{KH}$, $h'_{G4}$, $h'_{G6}$, $h'_{SC2}$ und $h'_{G7}$ sowie die Höhe $h_{FH}$, die die Höhe des Felgenhornes 18 relativ zum Felgeneckpunkt F der Schrägschulterfelge 17 angibt, eingezeichnet. Die Höhen $h'_{SC1}$

des Wulstverstärkers 7 und $h'_{KH}$ des Lagenhochschlages 6a der Einlage 6 sind, eine offene Wulstkonstruktion bildend, größer als $h_{FH}$. Die Höhe $h'_{G2}$ des Profilgliedes 11b des mehrgliedrigen, einteiligen Gabelprofiles 11 ist um etwa 2 mm bis 23 mm kleiner als die Höhe $h_{FH}$ der Felgenflanke mit dem Bezug auf den Felgeneckpunkt F der Schrägschulterfelge mit dem Radius $r_F$. Es gilt als idealer Bereich:

$$6,9 \text{ mm} \leq (h_{FH} - h'_{G2}) \leq 18,1 \text{ mm}$$

Für die Differenz zwischen Höhe $h'_{G4}$ des Profilgliedes $h'_{G4}$ des Gabelprofils 11 und die Höhe $h_{FH}$ des Felgenhornes gilt für einen auf einer passenden Schrägschulterfelge montierten Reifen:

$$19,8 \text{ mm} \leq (h'_{G4} - h_{FH}) \leq 52,1 \text{ mm}$$

**Bezugsziffernliste**

| | |
|---|---|
| 1 | Innenschicht |
| 2 | Kappe /Füllprofil |
| 3 | Felgenprofil |
| 4 | Seitenwand |
| 5 | Wulstkern |
| 6 | Karkasseinlage |
| 6a | Hochschlag der Karkasseinlage, Lagenhochschlag |
| 7 | Wulstverstärker |
| 8a | Kernprofil |
| 8b | Kernprofil |
| 9 | Flipper, Kernfahne |
| 10 | Wulstpolster |
| $h_{scl}$ | Höhe des Wulstverstärkers reifenaußenseitig |
| $h_{SC2}$ | Höhe des Wulstverstärkers reifeninnenseitig |
| $h'_{scl}$ | Höhe des Wulstverstärkers reifenaußenseitig |
| $h'_{sc2}$ | Höhe des Wulstverstärkers reifeninnenseitig |
| $h_{KH}$ | Höhe des Lagenhochschlages |
| $h'_{KH}$ | Höhe des Lagenhochschlages |
| 11 | Gabelprofil |
| 11a | Profilglied |
| 11b | Profilglied |
| 11c | Profilglied |
| 11d | Profilglied |
| $l_{G11A}$ | Erstreckungslänge |
| $k_{G11B}$ | Erstreckungslänge |
| $l_{G11C}$ | Erstreckungslänge |
| $l_{G11D}$ | Erstreckungslänge |
| $h_{G1}$ | Höhe |
| $h_{G2}$ | Höhe |
| $h_{G3}$ | Höhe |
| $h_{G4}$ | Höhe |
| $h'_{G2}$ | Höhe |
| $h'_{G4}$ | Höhe |
| $l_{G1}$ | Gesamtlänge |
| $b_{G1}$ | Gesamtbreite |
| $s_{G1}$ | Schwerpunkt |
| $as_{G1}$ | Schwerpunktsbereich |
| 12 | Gabelprofil |
| 12a | Profilglied |
| 12b | Profilglied |
| 12c | Profilglied |
| $l_{G12A}$ | Erstreckungslänge |
| $l_{G12B}$ | Erstreckungslänge |
| $l_{G12C}$ | Erstreckungslänge |
| $h_{G5}$ | Höhe |
| $h_{G6}$ | Höhe |
| $h_{G7}$ | Höhe |
| $h'_{G6}$ | Höhe |
| $h'_{G7}$ | Höhe |
| $l_{G2}$ | Erstreckungslänge |
| $b_{G2}$ | Erstreckungsbreite |
| $S_{G2}$ | Schwerpunkt |
| $as_{G2}$ | Schwerpunktsbereich |
| $r_{A1}$ | Radius |
| $r_{A2}$ | Radius |
| $r_X$ | Radius |
| $r_F$ | Radius |
| F | Felgeneckpunkt der Fahrzeugfelge |
| X | Felgeneckpunkt des Reifens |
| 13 | Gürtelverstärkung |
| 14 | Laufstreifen |
| $h_{FH}$ | Höhe |
| 15 | Steilschulterfelge / Fahrzeugfelge |
| 16 | Flanke der Steilschulterfelge / Fahrzeugfelge |
| 17 | Schrägschulterfelge / Fahrzeugfelge |
| 18 | Flanke der Schrägschulterfelge / Fahrzeugfelge |

**Patentansprüche**

1. Fahrzeugluftreifen, insbesondere für Schwerlastfahrzeuge, in radialer Bauart, mit zumindest einer Karkasseinlage (6) mit Festigkeitsträgern aus Stahlkord oder textilen Korden, welche in Wulstbereichen um Wulstkerne (5) Hochschläge (6a) und eine offene Wulstkonstruktion bildend umgeschlagen ist, wobei in jedem Wulstbereich entlang der Außenseite der Karkasseinlage (6) bzw. der äußersten Karkasseinlage, den Wulstkern (5) U-förmig umlaufend, ein Wulstverstärker (7) angeordnet ist, dessen reifenaußenseitiges Ende sich radial innerhalb des Endes des Karkasshochschlages (6a) befindet und bis auf eine Höhe ($h_{SC1}$) reicht, welche 18 mm bis 77 mm beträgt und dessen reifeninnenseitiges Ende bis auf eine Höhe ($h_{SC2}$) reicht, welche 19 mm bis 91 mm beträgt, wobei die Höhen ($h_{SC1}$, $h_{SC2}$) in radialer Richtung vom Felgeneckpunkt (X) des Wulstes gemessen sind, wobei zumindest der Endabschnitt des Karkasshochschlages (6a) und der diesem benachbarte Eridabschnitt des Wulstverstärkers (7) von Gummimischungen gesondert eingefasst sind, wobei in jedem Wulst die Endabschnitte des Karkasshochschlages (6a) und des Wulstverstärkers (7) von Profilgliedern (1 1a, 11b, 11c) eines mehrgliedrigen, einteiligen Gabelprofils (11) eingefasst und in einem definierten Abstand gehalten sind, **dadurch gekennzeichnet, dass** das Gabelprofil (11) einen Schwerpunkt ($s_{G1}$) aufweist, der in dem Bereich des Karkasshochschlages (6a) und in einem Schwerpunktsbereich ($as_{G1}$) liegt, welcher im Wesentlichen um den Karkasshochschlag 6a herumführt und eine Längserstreckung ($las_{G1}$) von etwa 10 mm und eine Breite ($bas_{G1}$) von etwa 3 mm aufweist.

2. Fahrzeugluftreifen nach Anspruch 1, **dadurch gekennzeichnet, dass** das Gabelprofil (11) ein Profilglied (11d) aufweist, welches sich in Verlängerung des Karkasshochschlages (6a) erstreckt.

3. Fahrzeugluftreifen nach Anspruch 1 oder 2, **dadurch gekennzeichnet, dass** das Gabelprofil (11) zwei den Endabschnitt des Karkasshochschlages (6a) einfassende Profilglieder (11a, 11b) aufweist, wobei von dem weiter reifenaußenseitig verlaufenden Profilglied (11b) ein weiteres Profilglied (11c) abzweigt, welches entlang der Außenseite des Endabschnittes des Wulstverstärkers (7) verläuft.

4. Fahrzeugluftreifen nach einem der Ansprüche 1 bis 3, **dadurch gekennzeichnet, dass** das radial innere Ende des den Endabschnitt des Karkasshochschlages (6a) reifeninnenseitig einfassenden Profilgliedes (11a) in einer Höhe ($h_{G1}$) endet, die zwischen 8 mm und 66 mm beträgt, und dass das radial innere Ende des den Endabschnitt des Karkasshochschlages (6a) reifenaußenseitig einfassenden Profilgliedes (11b) in einer Höhe ($h_{G2}$) endet, die zwischen 5 mm und 58 mm beträgt, wobei die Höhen ($h_{G1}$, $h_{G2}$) auf den Felgeneckpunkt (X) des Wulstes bezogen und in radialer Richtung gemessen sind.

5. Fahrzeugluftreifen nach einem der Ansprüche 1 bis 4, **dadurch gekennzeichnet, dass** das radial innere Ende des den Endabschnitt des Wulstverstärkers (7) reifenaußenseitig erfassenden Profilgliedes (11c) auf einer Höhe ($h_{G3}$) endet, die zwischen 6 mm und 59 mm beträgt, wobei die Höhe ($h_{G3}$) auf den Felgeneckpunkt (X) des Wulstes bezogen und in radialer Richtung gemessen ist.

6. Fahrzeugluftreifen nach einem der Ansprüche 1 bis 5, **dadurch gekennzeichnet, dass** das in Verlängerung des Karkasshochschlages (6a) verlaufende Profilglied (11d) bis in eine Höhe ($h_{G4}$) reicht, welche zwischen 36 mm und 104 mm beträgt, wobei die Höhe ($h_{G4}$) auf den Felgeneckpunkt (X) des Wulstes bezogen und in radialer Richtung gemessen ist.

7. Fahrzeugluftreifen nach einem der Ansprüche 1 bis 6, **dadurch gekennzeichnet, dass** das Gabelprofil (11) eine maximale Erstreckungslänge ($l_G$) von 76 mm und eine maximale Erstreckungsbreite ($b_G$) von 8,6 mm aufweist.

8. Fahrzeugluftreifen nach einem der Ansprüche 1 bis 7, **dadurch gekennzeichnet, dass** das Gabelprofil (11) eine Querschnittsfläche aufweist, welche zwischen 66,8 $mm^2$ und 149,7 $mm^2$ beträgt.

9. Fahrzeugluftreifen nach einem der Ansprüche 1 bis 8, **dadurch gekennzeichnet, dass** der reifeninnenseitig gelegene Endabschnitt des Wulstverstärkers (7) von zwei Profilgliedern (12a, 12b) eines mehrgliedrig einteiligen Gabelprofils (12) umfasst ist, welches ein weiteres Profilglied (12c) aufweist, das in Verlängerung des Wulstverstärkers (7) verläuft.

10. Fahrzeugluftreifen nach Anspruch 9, **dadurch gekennzeichnet, dass** das radial innere Ende des weiter reifeninnenseitig verlaufenden, den Endabschnitt des Wulstverstärkers (7) erfassenden Profilgliedes (12a) in einer Höhe ($h_{G5}$) endet, die zwischen 8 mm und 72 mm beträgt, wobei das radial innere Ende des zweiten Profilgliedes (12b) in einer Höhe ($h_{G6}$) endet, die zwischen 6 mm und 70 mm beträgt, wobei die Höhen ($h_{G5}$, $h_{G6}$) auf den Felgeneckpunkt (X) des Wulstes bezogen und in radialer Richtung gemessen sind.

11. Fahrzeugluftreifen nach Anspruch 9 oder 10, **dadurch gekennzeichnet, dass** das in Verlängerung des Wulstverstärkers (7) verlaufende Profilglied (12c) bis in eine Höhe ($h_{G7}$) reicht, die zwischen 40 mm und 113 mm beträgt, wobei die Höhe ($h_{G7}$) auf den Felgeneckpunkt (X) des Wulstes bezogen und in radialer Richtung gemessen ist.

12. Fahrzeugluftreifen nach einem der Ansprüche 9 bis 11, **dadurch gekennzeichnet, dass** das Gabelprofil (12) einen Schwerpunkt ($s_{G2}$) in einem Schwerpunktsbereich ($as_{G2}$) aufweist, der in dem Bereich des reifeninnenseitigen Endabschnittes des Stahlkordwulstverstärkers (7) liegt, welcher eine Längserstreckung ($las_{G2}$) von etwa 10 mm und eine Breite ($bas_{G2}$) von etwa 2,5 mm aufweist.

13. Fahrzeugluftreifen nach einem der Ansprüche 9 bis 12, **dadurch gekennzeichnet, dass** das Gabelprofil (12) eine Querschnittsfläche aufweist, welche zwischen 37,3 $mm^2$ und 82,4 $mm^2$ beträgt.

14. Fahrzeugluftreifen nach einem der Ansprüche 1 bis 13, **dadurch gekennzeichnet, dass** die Gummimischung des Gabelprofils (11, 12) Kieselsäure in einem Anteil von 27 Massenprozent bis 31 Massenprozent enthält, bezogen auf die Summe der Massen aller Bestandteile der Mischung.

15. Fahrzeugluftreifen nach Anspruch 14, **dadurch gekennzeichnet, dass** die Kieselsäure der Gummimischung des Gabelprofils (11, 12) über eine Silanisierungsreaktion mit einem Organosilan an das Kautschuknetzwerk angebunden wird.

16. Fahrzeugluftreifen nach Anspruch 14 oder 15, **dadurch gekennzeichnet, dass** neben Kieselsäure weitere Füllstoffe in der Gummimischung des Gabelprofils (11, 12) eingesetzt werden.

**Claims**

1. Pneumatic vehicle tyre, in particular for heavy road vehicles, of a radial type of construction, with at least one carcass inlay (6) with reinforcing elements of steel cord or textile cords, which in bead regions is wrapped around bead cores (5), forming turn-ups (6a) and an open bead construction, wherein a bead reinforcer (7) is arranged in each bead region, running in a U-shaped manner around the bead core (5), along the outer side of the carcass inlay (6) or the outermost carcass inlay, the end of which reinforcer on the outside of the tyre is located radially inside the end of the carcass turn-up (6a) and reaches up to a height ($h_{SC1}$), which is 18 mm to 77 mm, and the end of which reinforcer on the inside of the tyre reaches up to a height ($h_{SC2}$), which is 19 mm to 91 mm, wherein the heights ($h_{SC1}$, $h_{SC2}$) are measured in the radial direction from the rim vertex (X) of the bead, wherein at least the end portion of the carcass turn-up (6a) and the end portion adjacent thereto of the bead reinforcer (7) are separately enclosed by rubber compounds, wherein in each bead the end portions of the carcass turn-up (6a) and of the bead reinforcer (7) are enclosed by profiled members (11a, 11b, 11c) of a multi-membered, one-part fork profile (11) and are kept at a defined distance, **characterized in that** the fork profile (11) has a centroid ($S_{G1}$), which lies in the region of the carcass turn-up (6a) and in a centroid region ($as_{C1}$), which is substantially led around the carcass turn-up 6a and has a longitudinal extent ($las_{G1}$) of approximately 10 mm and a width ($bas_{G1}$) of approximately 3 mm.

2. Pneumatic vehicle tyre according to Claim 1, **characterized in that** the fork profile (11) has a profiled member (11d), which extends as an extension of the carcass turn-up (6a).

3. Pneumatic vehicle tyre according to Claim 1 or 2, **characterized in that** the fork profile (11) has two profiled members (11a, 11b), enclosing the end portion of the carcass turn-up (6a), wherein a further profiled member (11c), which runs along the outer side of the end portion of the bead reinforcer (7), branches off from the profiled member (11b) running further on the outside of the tyre.

4. Pneumatic vehicle tyre according to one of Claims 1 to 3, **characterized in that** the radially inner end of the profiled member (11a) enclosing the end portion of the carcass turn-up (6a) on the inside of the tyre ends at a height ($h_{G1}$), which is between 8 mm and 66 mm, and **in that** the radially inner end of the profiled member (11b) enclosing the end portion of the carcass turn-up (6a) on the outside of the tyre ends at a height ($h_{G2}$), which is between 5 mm and 58 mm, wherein the heights ($h_{G1}$, $h_{G2}$) are with respect to the rim vertex (X) of the bead and are measured in the radial direction.

5. Pneumatic vehicle tyre according to one of Claims 1 to 4, **characterized in that** the radially inner end of the profiled member (11c) enclosing the end portion of the bead reinforcer (7) on the outside of the tyre ends at a height ($h_{G3}$), which is between 6 mm and 59 mm, wherein the height ($h_{G3}$) is with respect to the rim vertex (X) of the bead and is measured in the radial direction.

6. Pneumatic vehicle tyre according to one of Claims 1 to 5, **characterized in that** the profiled member (lid) running as an extension of the carcass turn-up (6a) reaches up to a height ($h_{G4}$), which is between 36 mm and 104 mm, wherein the height ($h_{G4}$) is with respect to the rim vertex (X) of the bead and is measured in the radial direction.

7. Pneumatic vehicle tyre according to one of Claims 1 to 6, **characterized in that** the fork profile (11) has a maximum length of extent ($l_G$) of 76 mm and a maximum width of extent ($b_G$) of 8.6 mm.

8. Pneumatic vehicle tyre according to one of Claims 1 to 7, **characterized in that** the fork profile (11) has a cross-sectional area which is between 66.8 mm$^2$ and 149.7 mm$^2$.

9. Pneumatic vehicle tyre according to one of Claims 1 to 8, **characterized in that** the end portion of the bead reinforcer (7) situated on the inside of the tyre is enclosed by two profiled members (12a, 12b) of a multi-membered, one-part fork profile (12), which has a further profiled member (12c), which runs as an extension of the bead reinforcer (7).

10. Pneumatic vehicle tyre according to Claim 9, **characterized in that** the radially inner end of the profiled member (12a) running further on the inside of the tyre and enclosing the end portion of the bead reinforcer (7) ends at a height ($h_{G5}$), which is between 8 mm and 72 mm, wherein the radially inner end of the second profiled member (12b) ends at a height ($h_{G6}$), which is between 6 mm and 70 mm, wherein the heights ($h_{G5}$, $h_{G6}$) are with respect to the rim vertex (X) of the bead and are measured in the radial direction.

11. Pneumatic vehicle tyre according to Claim 9 or 10, **characterized in that** the profiled member (12c) running as an extension of the bead reinforcer (7) reaches up to a height ($h_{G7}$), which is between 40 mm and 113 mm, wherein the height ($h_{G7}$) is with respect to the rim vertex (X) of the bead and is measured in the radial direction.

12. Pneumatic vehicle tyre according to one of Claims 9 to 11, **characterized in that** the fork profile (12) has a centroid ($S_{G2}$) in a centroid region ($as_{G2}$), which lies in the region of the end portion of the steel-cord bead reinforcer (7) on the inside of the tyre, which has a longitudinal extent ($las_{G2}$) of approximately 10 mm and a width ($bas_{G2}$) of approximately 2.5 mm.

13. Pneumatic vehicle tyre according to one of Claims 9 to 12, **characterized in that** the fork profile (12) has a cross-sectional area which is between 37.3 $mm^2$ and 82.4 $mm^2$.

14. Pneumatic vehicle tyre according to one of Claims 1, to 13, **characterized in that** the rubber compound of the fork profile (11, 12) contains silica in a proportion of 27 percent by mass to 31 percent by mass, with respect to the sum of the masses of all the constituents of the compound.

15. Pneumatic vehicle tyre according to Claim 14, **characterized in that** the silica of the rubber compound of the fork profile (11, 12) is bonded to the rubber network by way of a silanization reaction with an organosilane.

16. Pneumatic vehicle tyre according to Claim 14 or 15, **characterized in that**, in addition to silica, further fillers are used in the rubber compound of the fork profile (11, 12).

**Revendications**

1. Pneumatique de véhicule, notamment pour poids-lourds, de construction radiale, avec au moins un insert de carcasse (6) avec des supports de rigidification en trames en acier côtelées ou tissus côtelés rabattus pour former, dans les zones de bourrelet entourant les coeurs de bourrelet (5), des lobes (6a) et une construction en bourrelet ouverte, un élément de renfort de bourrelet (7) étant disposé dans chaque zone de bourrelet le long du côté extérieur de l'insert de carcasse (6) et/ou de l'insert de carcasse le plus à l'extérieur, entourant en forme de U le coeur de bourrelet (5), l'extrémité située du côté extérieur de pneumatique dudit élément de renfort se trouvant dans le plan radial à l'intérieur de l'extrémité du lobe de carcasse (6a) et pouvant atteindre une hauteur ($h_{sc1}$) de 18 mm à 77 mm et dont l'extrémité située du côté intérieur de pneumatique peut atteindre une hauteur ($h_{sc2}$) de 19 mm à 91 mm, les hauteurs ($h_{sc1}$, $h_{sc2}$) étant mesurées dans la direction radiale à partir du coin de jante (X) du bourrelet, au moins la section d'extrémité du lobe de carcasse (6a) et la section d'extrémité, connexe à celui-ci, de l'élément de renfort de bourrelet (7) étant bordées séparément de mélanges de caoutchouc, les sections d'extrémité du lobe de carcasse (6a) et de l'élément de renfort de bourrelet (7) étant bordées, dans chaque bourrelet, par les maillons profilés (11a, 11b, 11c) d'un profil de fourche (11) à plusieurs maillons réalisé d'un seul tenant et maintenus à une distance définie, **caractérisé en ce que** le profil de fourche (11) comporte un centre de gravité ($S_{G1}$) situé dans la zone du lobe de carcasse (6a) et dans une zone de centre de gravité ($as_{G1}$) entourant pour l'essentiel le lobe de carcasse 6a et présentant une extension longitudinale ($las_{G1}$) d'environ 10 mm et une largeur ($bas_{G1}$) d'environ 3 mm.

2. Pneumatique de véhicule selon la revendication 1, **caractérisé en ce que** le profil de fourche (11) comporte un maillon de profilé (11d) s'étendant dans le prolongement du lobe de carcasse (6a).

3. Pneumatique de véhicule selon la revendication 1 ou 2, **caractérisé en ce que** le profil de fourche (11) comporte deux maillons de profilé (11a, 11b) bordant la section d'extrémité du lobe de carcasse (6a), un maillon de profilé (11c) supplémentaire bifurquant à partir du maillon de profilé (11b) s'étendant davantage du côté extérieur de pneumatique, ledit maillon supplémentaire s'étendant le long du côté extérieur de la section d'extrémité de l'élément de renfort de bourrelet (7).

4. Pneumatique de véhicule selon l'une quelconque des revendications 1 à 3, **caractérisé en ce que** l'extrémité intérieure dans le plan radial du maillon de profilé (lia) bordant du côté intérieur de pneumatique la section d'extrémité du lobe de carcasse (6a) prend fin dans une hauteur ($h_{G1}$) comprise entre 8 mm et 66 mm et que l'extrémité intérieure dans le plan radial du maillon de profilé (11b) bordant du côté extérieur de pneumatique la section d'extrémité du lobe de carcasse (6a) prend fin dans une hauteur ($h_{G2}$) comprise entre 5 mm et 58 mm, les hauteurs

($h_{G1}$, $h_{G1}$) étant prises sur le coin de jante (X) du bourrelet et mesurées dans la direction radiale.

5. Pneumatique de véhicule selon l'une quelconque des revendications 1 à 4, **caractérisé en ce que** l'extrémité intérieure dans le plan radial du maillon de profilé (11c) comprenant du côté extérieur de pneumatique la section d'extrémité de l'élément de renfort de bourrelet (7) prend fin à une hauteur ($h_{G3}$) comprise entre 6 mm et 59 mm, la hauteur ($h_{G3}$) étant prise sur le coin de jante (X) du bourrelet et mesurée dans la direction radiale.

6. Pneumatique de véhicule selon l'une quelconque des revendications 1 à 5, **caractérisé en ce que** le maillon de profilé (11d) s'étendant dans le prolongement du lobe de carcasse (6a) peut atteindre une hauteur ($h_{G4}$) comprise entre 36 mm et 104 mm, la hauteur ($h_{G4}$) étant prise sur le coin de jante (X) du bourrelet et mesurée dans la direction radiale.

7. Pneumatique de véhicule selon l'une quelconque des revendications 1 à 6, **caractérisé en ce que** le profil de fourche (11) comporte une longueur d'extension ($l_G$) maximale de 76 mm et une largeur d'extension ($b_G$) maximale de 8,6 mm.

8. Pneumatique de véhicule selon l'une quelconque des revendications 1 à 7, **caractérisé en ce que** le profil de fourche (11) comporte une surface de section transversale comprise entre 66,8 mm$^2$ et 149,7 mm$^2$.

9. Pneumatique de véhicule selon l'une quelconque des revendications 1 à 8, **caractérisé en ce que** la section d'extrémité, située du côté intérieur de pneumatique, de l'élément de renfort de bourrelet (7) est composée de deux maillons de profilé (12a, 12b) d'un profil de fourche (12) à plusieurs maillons réalisé d'un seul tenant comportant un maillon de profilé (12c) supplémentaire s'étendant dans le prolongement de l'élément de renfort de bourrelet (7).

10. Pneumatique de véhicule selon la revendication 9, **caractérisé en ce que** l'extrémité, intérieure dans le plan radial, du maillon de profilé (12a) s'étendant davantage du côté intérieur de pneumatique comprenant la section d'extrémité de l'élément de renfort de bourrelet (7) prend fin dans une hauteur ($h_{G5}$) comprise entre 8 mm et 72 mm, l'extrémité, intérieure dans le plan radial, du deuxième maillon de profilé (12b) prenant fin dans une hauteur ($h_{G6}$) comprise entre 6 mm et 70 mm, les hauteurs ($h_{G5}$, $h_{G6}$) étant prises sur le coin de jante (X) du bourrelet et mesurées dans la direction radiale.

11. Pneumatique de véhicule selon la revendication 9 ou 10, **caractérisé en ce que** le maillon de profilé (12c) s'étendant dans le prolongement de l'élément de renfort de bourrelet (7) atteint une hauteur ($h_{G7}$) comprise entre 40 mm et 113 mm, la hauteur ($h_{G7}$) étant prise sur le coin de jante (X) du bourrelet et mesurée dans la direction radiale.

12. Pneumatique de véhicule selon l'une quelconque des revendications 9 à 11, **caractérisé en ce que** le profil de fourche (12) comporte un centre de gravité ($s_{G2}$) dans une zone de centre de gravité ($as_{G2}$) située dans la zone de la section d'extrémité, du côté intérieur de pneumatique, de élément de renfort de bourrelet (7) à trames en acier côtelées présentant une extension longitudinale ($las_{G2}$) d'environ 10 mm et une largeur ($bas_{G2}$) d'environ 2,5 mm.

13. Pneumatique de véhicule selon l'une quelconque des revendications 9 à 12, **caractérisé en ce que** le profil de fourche (12) comporte une surface de section transversale comprise entre 37,3 mm$^2$ et 82,4 mm$^2$.

14. Pneumatique de véhicule selon l'une quelconque des revendications 1 à 13, **caractérisé en ce que** le mélange de caoutchouc du profil de fourche (11, 12) contient de la silice dans une teneur allant de 27 pour cent en masse à 31 pour cent en masse si l'on considère la somme des masses de tous les composants du mélange.

15. Pneumatique de véhicule selon la revendication 14, **caractérisé en ce que** la silice du mélange de caoutchouc du profil de fourche (11, 12) est reliée au caoutchouc réticulé à l'aide d'un organosilane via une réaction de silanisation.

16. Pneumatique de véhicule selon la revendication 14 ou 15, **caractérisé en ce que** des matières de remplissage supplémentaires sont utilisées, outre la silice, dans le mélange de caoutchouc du profil de fourche (11, 12).

**Fig. 1**

Fig. 1b

Fig. 2

EP 2 547 537 B1

**Fig. 2b**

**Fig. 3**

**Fig. 4**

EP 2 547 537 B1

EP 2 547 537 B1

Fig. 5

21

Fig. 6

**Fig. 7**

EP 2 547 537 B1

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007113944 A1
- US 2009056851 A1
- US 2008035261 A1